# EUROPEAN PATENT SPECIFICATION

(11) **EP 4 373 100 B1**
(45) Date of publication and mention of the grant of the patent: **10.09.2025**
(21) Application number: 22858591.5
(22) Date of filing: 20.06.2022
(51) Int. Cl.: H04N 21/422, H04N 21/436, H04N 21/4363, H04M 1/72415, G08C 17/02

(54) **ELECTRONIC APPARATUS FOR CONTROLLING AT LEAST ONE EXTERNAL APPARATUS.**
ELEKTRONISCHE VORRICHTUNG ZUR STEUERUNG MINDESTENS EINER EXTERNEN VORRICHTUNG.
APPAREIL ÉLECTRONIQUE POUR COMMANDER AU MOINS UN APPAREIL EXTERNE.

(30) Priority: 18.08.2021 KR 20210109058
(43) Date of publication of application: 22.05.2024
(73) Proprietor: Samsung Electronics Co., Ltd., Suwon-si, Gyeonggi-do 16677 (KR)
(72) Inventor: PARK, Nojoon, Suwon-si Gyeonggi-do 16677 (KR); LEE, Hyojung, Suwon-si Gyeonggi-do 16677 (KR); PARK, Junhyung, Suwon-si Gyeonggi-do 16677 (KR); SONG, Gajin, Suwon-si Gyeonggi-do 16677 (KR); JEON, Jinwoo, Suwon-si Gyeonggi-do 16677 (KR); KIM, Seokhyun, Suwon-si Gyeonggi-do 16677 (KR); LIM, Chaigil, Suwon-si Gyeonggi-do 16677 (KR)
(74) Representative: Gulde & Partner
(86) International application number: PCT/KR2022/008711
(87) International publication number: WO 2023/022349

(56) References cited:
- KR-A- 20160 010 093
- KR-A- 20210 050 811
- KR-B1- 100 513 851
- KR-B1- 102 022 666
- US-A1- 2009 300 620
- US-B2- 9 786 159

## Description

### [Technical Field]

Various embodiments of the disclosure relate to an electronic device for controlling at least one external device and an operating method therefor.

### [Background Art]

An electronic device may refer to a device, such as a home appliance, an electronic notebook, a portable multimedia player, a mobile communication terminal, a tablet PC, a video/audio device, a desktop/laptop computer, an in-car navigation system, an air conditioner, fan, or a lighting device, that performs a specific function based on a program installed thereon. In this case, a remote controller may operate the electronic device. For example, a TV may be operated by a TV remote controller, and an air conditioner may be operated by an air conditioner remote controller.

Recently, a technology wherein a mobile device, which is a user device, implements functions of different types of remote controllers in a single mobile device has been introduced. According to a general point-to-control method, when aiming a mobile device supporting a ultra-wideband (UWB) communication function at another UWB communication-capable device, the mobile device may recognize information of the corresponding device and display the information on a control screen related to the corresponding device, thereby controlling the corresponding device. A prior art electronic device for controlling an external apparatus is disclosed by US2009/300620 A1.

### [Detailed Description of the Invention]

### [Technical Problem]

According to the general point-to-control method, a first device is recognized by aiming a mobile device at the first device and a first control screen related to the first device is displayed, thereby controlling the first device, and subsequently a second device is recognized by aiming the mobile device at the second device and a second control screen related to the second device is displayed, thereby controlling the second device. Accordingly, there may be inconvenience in that screen display and control operations should be performed multiple times in order to control multiple devices.

In addition, in the general point-to-control method, when multiple devices to be controlled are densely packed, control of a device to be controlled is enabled by accurately aiming the mobile device at the corresponding device, and if aiming is not accurately performed, there may be difficulties in terms of usability because unintended devices may be controlled.

An electronic device for controlling at least one external device according to various embodiments of the disclosure may provide a function of continuously controlling multiple electronic devices located around the electronic device.

### [Technical Solution]

The present invention is defined by the appended set of claims. According to various embodiments, an electronic device may include at least one communication module, a display, and a processor, wherein the processor is configured to control a display module to display, on the display module, a first screen for selecting at least one of at least one function, identify selection of a first function among the at least one function while the first screen is displayed, recognize, in response to the selection of the first function, at least one external device located around the electronic device by using a first communication module supporting an ultra-wideband (UWB) scheme among the at least one communication module, identify whether the at least one external device is capable of performing the first function, and based on the at least one external device being capable of performing the first function, transmit to a server connected to the at least one external device, by using at least a part of the at least one communication module, at least one control request signal requesting a control signal for performing the first function to be transmitted to the at least one external device.

According to various embodiments, an electronic device may include at least one communication module, a display, and a processor, wherein the processor is configured to control a display module to display, on the display module, a first screen for selecting at least one of at least one function, identify selection of a first function among the at least one function while the first screen is displayed, recognize, in response to the selection of the first function, at least one external device located around the electronic device by using a first communication module supporting an ultra-wideband (UWB) scheme among the at least one communication module, identify whether the at least one external device is capable of performing the first function, and based on the at least one external device being capable of performing the first function, transmit a control signal for performing the first function to the at least one external device, by using at least a part of the at least one communication module.

### [Advantageous Effects]

An electronic device that continuously controls at least one external device according to various embodiments may continuously control multiple electronic devices located around the electronic device so that the multiple electronic devices may perform substantially the same function.

According to various embodiments, by providing an electronic device for continuously controlling at least one external device and an operating method therefor, it is possible to reduce operations to control multiple devices and to provide the effect of improved usability of more accurately controlling a device to be controlled, even when multiple devices are densely packed.

### [Brief Description of Drawings]

FIG. 1 is a block diagram of an electronic device in a network environment according to various embodiments;
FIG. 2 is a block diagram of an electronic device according to various embodiments;
FIG. 3 is a flowchart illustrating an operation of an electronic device according to various embodiments;
FIG. 4 illustrates an operation of an electronic device according to various embodiments;
FIG. 5 illustrates an operation of an electronic device according to various embodiments;
FIG. 6 is a flow diagram illustrating an operation of an electronic device according to various embodiments;
FIG. 7 illustrates an operation of an electronic device according to various embodiments;
FIG. 8 is a flow diagram illustrating an operation of an electronic device according to various embodiments;
FIG. 9 is a flowchart illustrating an operating method of an electronic device according to various embodiments;
FIG. 10A illustrates an operating method of an electronic device according to various embodiments;
FIG. 10B illustrates an operation of an electronic device according to various embodiments;
FIG. 11 illustrates an operation of an electronic device according to various embodiments; and
FIG. 12 is a flowchart illustrating an operation of an electronic device according to various embodiments.

### [Mode for Performing the Invention]

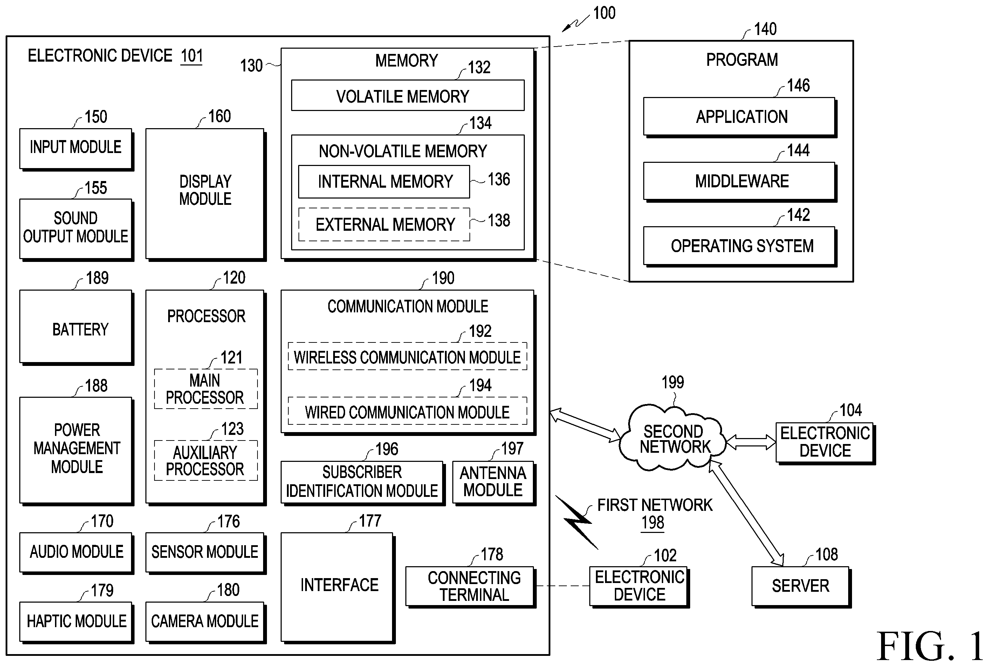

FIG. 1 is a block diagram illustrating an electronic device 101 in a network environment 100 according to embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

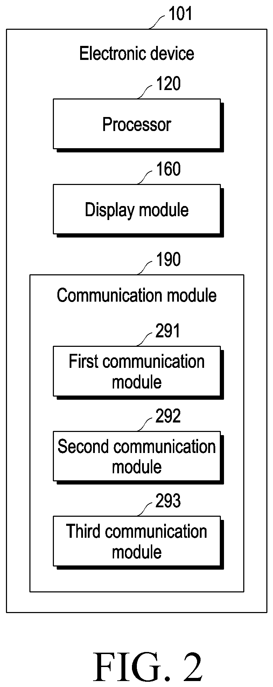

FIG. 2 is a block diagram of an electronic device according to various embodiments.

Referring to FIG. 2, an electronic device 101 according to an embodiment may include a processor 120, a display module 160, and a communication module 190. According to an embodiment, the communication module 190 of the electronic device 101 may be implemented by at least one communication module (e.g., a first communication module 291, a second communication module 292, and/or a third communication module 293). The first communication module 291 may support a first communication scheme. The second communication module 292 may support a second communication scheme. The third communication module 293 may support a third communication scheme.

According to an embodiment, the first communication scheme supported by the first communication module 291 may be an ultra-wideband (UWB) communication method. For example, the electronic device 101 (e.g., the processor 120) may identify, by using the first communication module 291, the location of the at least one external electronic device located around the electronic device 101. For example, the electronic device 101 may identify, by using the first communication module 291, a distance from the electronic device 101 to the at least one external electronic device and/or a direction of the at least one external electronic device with reference to the electronic device 101.

According to an embodiment, the second communication scheme supported by the second communication module 292 may be a communication scheme operating in the first network 198 (e.g., a short-range wireless communication network). For example, the second communication scheme may be a Bluetooth (or Bluetooth low energy (BLE)) communication scheme, but if it is different from the first communication scheme, there is no limitation to a communication scheme. For example, the second communication scheme may be a Zigbee, Wi-Fi, and/or near field communication (NFC) communication scheme. For example, the electronic device 101 (e.g., the processor 120) may perform, by using the second communication module 292, short-range wireless communication with at least one external electronic device located around the electronic device 101.

According to an embodiment, the third communication scheme supported by the third communication module 293 may be a communication scheme operating in the second network 199 (e.g., a long-distance wireless communication network). For example, the electronic device 101 (e.g., the processor 120) may perform long-distance wireless communication with at least one external electronic device by using the third communication module 293.

The specific types of communication methods supported by the first communication module 291, second communication module 292, and third communication module 293 described above are exemplary and there is no limitation thereto. The electronic device 101 may include a communication module not disclosed in FIG. 2, and the description of FIG. 1 may be referred to.

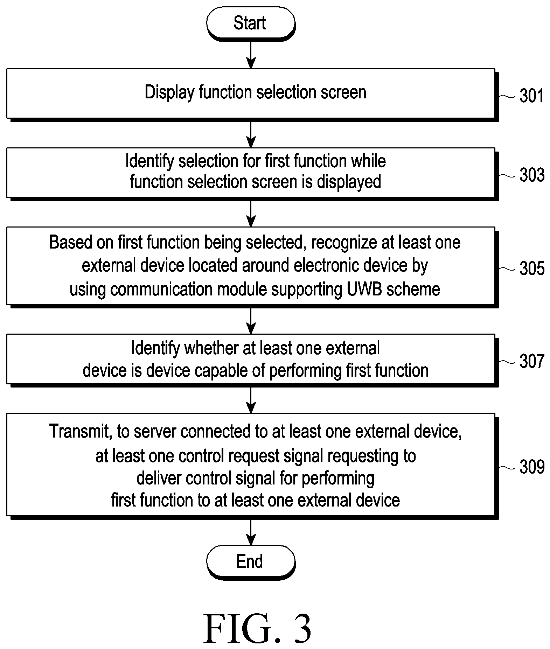

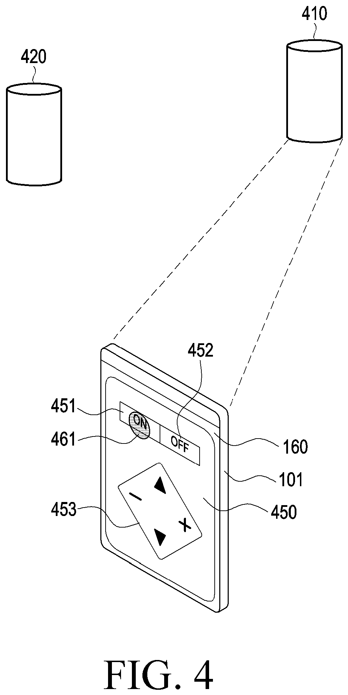

FIG. 3 is a flowchart illustrating an operation of an electronic device according to various embodiments. FIG. 3 will be described with reference to FIG. 4. FIG. 4 illustrates an operation of an electronic device according to various embodiments. A first external device 410 and/or a second external device 420 disclosed in FIG. 4 may be the same or similar type of electronic device as the electronic device 101, or may be a different type of electronic device from the electronic device 101, and the type of the first external device 410 and/or the second external device 420 is not limited thereto.

Referring to FIG. 3, in operation 301, the electronic device 101 (e.g., the processor 120) according to various embodiments may display, on the display module 160, a function selection screen (e.g., a function selection screen 450 of FIG. 4).

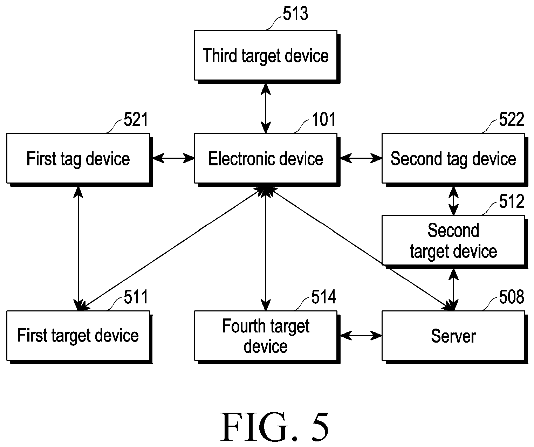

According to various embodiments, a function selection screen (e.g., the function selection screen 450 of FIG. 4) may refer to a screen for selection of at least one of at least one function. The function selection screen may include at least one object corresponding to at least one function, and the types of objects included in the function selection screen and the types of functions corresponding to the objects are not limited. At least one function selectable through the function selection screen may include a specific function and/or a common function. A common function may refer to a common function that may be performed by multiple electronic devices. For example, a power on/off function is a common function for turning on/off power of multiple electronic devices, and may be performed by multiple unspecified devices. For example, when a power-on button corresponding to a power-on function is selected on the function selection screen, all of multiple devices (e.g., the first external device 410 and/or the second external device 420 of FIG. 4) having received a control signal corresponding to the power-on function may perform an operation of turning on the power of the devices, respectively. As such, a common function and a control signal corresponding to the common function may refer to a function in which the same operation is performed in an electronic device having received the corresponding control signal and a control signal corresponding to the corresponding function, respectively. A specific function may refer to a function that may be performed only by a device supporting software and/or hardware for the specific function. For example, a volume control function may be a specific function for controlling a volume-adjustable device such as a TV or speaker. For example, when a volume up button corresponding to a volume up function is selected on the function selection screen, a device that provides the volume up function (e.g., the first external device 410 of FIG. 4), among multiple devices (e.g., the first external device 410 and/or the second external device 420 of FIG. 4) having received a control signal corresponding to the volume up function, may perform an operation to increase the volume, while a device that does not provide the volume up function (e.g., the second external device 420 of FIG. 4) may ignore a control signal corresponding to the volume up function and may not perform any operation. Alternatively, for example, a control signal corresponding to a volume up function may not be transmitted to a device that does not provide the volume up function (e.g., the second external device 420 of FIG. 4). Alternatively, for another example, even when a specific function is selected, multiple devices having received a control signal corresponding to a specific function may each perform a designated operation. For example, when a plus button is selected on the function selection screen, a control signal related to a function corresponding to the plus button may be transmitted to multiple devices (e.g., the first external device 410 and/or the second external device 420 of FIG. 4). At this time, when a TV (e.g., the first external device 410 of FIG. 4) receives a control signal related to a function corresponding to a plus button, the TV may perform an operation to increase the volume, and when an air conditioner (e.g., when the second external device 420 of FIG. 4) receives a control signal related to a function corresponding to a plus button, the air conditioner may increase a configured temperature. In this case, according to an embodiment, a device for receiving a control signal may interpret the control signal and perform a function corresponding to the control signal. For example, when a control signal related to a function corresponding to a plus button is transmitted to a first device (e.g., the first external device 410 or the second external device 420 of FIG. 4), the control signal received by the first device may simply include only information associated with a function corresponding to the plus button (e.g., information indicating that the plus button is selected). At this time, the first device (e.g., the first external device 410 or the second external device 420 of FIG. 4) may interpret the function corresponding to the plus button as a configured function, and may perform the configured function associated with the function corresponding to the plus button. For example, when the TV (e.g., the first external device 410 of FIG. 4) receives a control signal that includes information associated with a function corresponding to the plus button, the TV may interpret the control signal to perform a function to increase the volume, and when the air conditioner (e.g., the second external device 420 of FIG. 4) receives the same control signal, the air conditioner may interpret the control signal to perform a function to increase a configured temperature. According to another embodiment, a device (e.g., the electronic device 101, or a server 508 of FIG. 5) that transmits a control signal or a device (e.g., the electronic device 101) that requests transmission of a control signal may determine information included in the control signal based on the characteristics of a device (e.g., the first external device 410 or second external device 420 of FIG. 4) which will receive the control signal. For example, when the electronic device 101 selects a control signal associated with a function corresponding to a plus button, the electronic device 101 may identify the characteristics of a device to which the control signal is to be transmitted. For example, when a device to which the control signal is to be transmitted is identified as a TV (e.g., the first external device 410 of FIG. 4), the electronic device 101 may perform control such that a control signal associated with a function of increasing the volume is transmitted to the TV based on the plus button being selected, or when a device to which the control signal is to be transmitted is identified as an air conditioner (e.g., the second external device 420 of FIG. 4), the electronic device 101 may perform control such that a control signal associated with a function of increasing a configured temperature is transmitted to the air conditioner based on the plus button being selected. As such, a specific function, and a control signal corresponding to the specific function may refer to a function in which an operation to be performed is determined according to the characteristics of the device having received the control signal, and a control signal corresponding to the function, respectively. However, the descriptions of specific functions and common functions are exemplary, and there is no limitation to the types of at least one function included in the function selection screen. Further, the electronic device 101 may perform control such that a control signal associated with a function selected from the at least one function is transmitted to another electronic device (e.g., the first external device 410 and/or the second external device 420 of FIG. 4).

For example, referring to FIG. 4, the electronic device 101 may display a function selection screen 450. The function selection screen 450 may include at least one object (e.g., objects 451, 452, and/or 453) corresponding to at least one function. For example, referring to FIG. 4, the electronic device 101 may display a function selection screen 450 that includes a first button (e.g., the first object 451) corresponding to a power-on function, a second button (e.g., the second object 452) corresponding to a power-off function, and/or a third button (e.g., third object 453) corresponding to a channel and volume control function (or, a temperature and angle control function).

In operation 303, the electronic device 101 according to various embodiments may identify a selection for a first function from among the at least one function while the function selection screen (e.g., the function selection screen 450 of FIG. 4) is displayed. For example, the electronic device 101 may, based on at least one of the at least one object (e.g., objects 451, 452, and/or 453) included in the function selection screen 450 being selected, identify that a function corresponding to the selected object (e.g., the object 451) is selected. For example, referring to FIG. 4, based on a user input 461 for selecting the first object 451 from among the first object 451, the second object 452, and/or the third object 453 included in the function selection screen 450, the electronic device 101 may identify a selection for the first function (e.g., a power-on function) corresponding to the first object 451, and a person skilled in the art will understand that various alternative examples of the user input 461 such as voice commands and gaze recognition, in addition to touch, are possible.

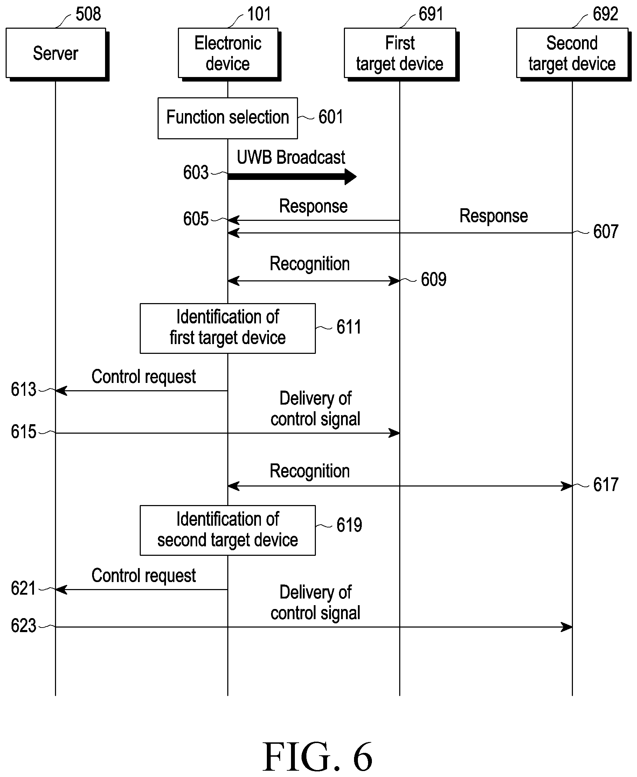

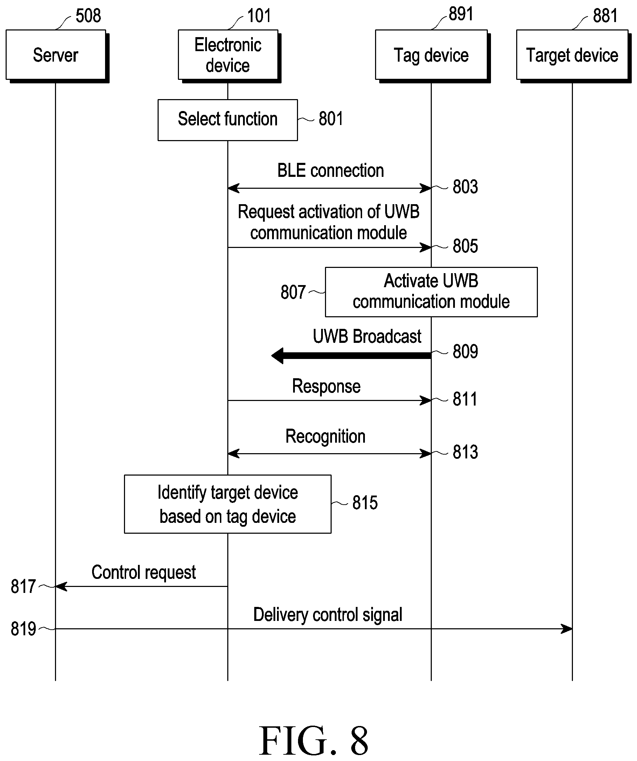

In operation 305, based on that at least one (e.g., a function corresponding to the first object 451 of FIG. 4) of the at least one function is selected during the display of the function selection screen (e.g., the function selection screen 450 of FIG. 4), the electronic device 101 according to various embodiments may recognize at least one external device (e.g., the first external device 410 and/or the second external device 420 of FIG. 4) located around the electronic device 101 by using the first communication module 291. For example, the electronic device 101 may recognize at least one external device (e.g., the first external device 410 and/or the second external device 420 of FIG. 4) by using the first communication module 291, based on that a relative position between the electronic device 101 and the at least one external device (e.g., the first external device 410 and/or the second external device 420 of FIG. 4) falls within a configured range. For example, the configured range may include a configured angle range and/or a configured distance range. For example, FIG. 4 illustrates the electronic device 101 being aimed at the first external device 410 among the first external device 410 and the second external device 420. Referring to FIG. 4, the electronic device 101 may recognize the first external device 410 based on that a relative position between the electronic device 101 and the first external device 410 falls within a configured range. For example, the electronic device 101 may recognize the first external device 410, by using the first communication module 291 supporting a UWB communication scheme, based on that a distance between the electronic device 101 and the first external device 410 belongs to a configured distance range, and/or an angle formed by the electronic device 101 and the first external device 410 belongs to a configured angle range. For example, in FIG. 4, the electronic device 101 may, based on being aimed at the first external device 410, recognize the first external device 410, but may not recognize the second external device 420. The electronic device 101 recognizing the other electronic device (e.g., the first external device 410) may refer to that the electronic device 101 and the other electronic device (e.g., the first external device 410) transmits or receives messages (e.g., a ranging poll message, a ranging response message, and/or a ranging final message of a UWB communication scheme) by using the UWB communication scheme, and thus identifies that a relative position between the electronic device 101 and another electronic device (e.g., the first external device 410) falls within a configured range, based on an angle of arrival (AOA) scheme, a single-sided two-way ranging (SS-TWR) scheme, and/or a double-sided two-way ranging (DS-TWR) scheme. The electronic device 101 not recognizing the other electronic device (e.g., the second external device 420) may refer to that the electronic device 101 and the other electronic device (e.g., the second external device 420) do not transmit or receive messages (e.g., a ranging poll message, a ranging response message, and/or a ranging final message of a UWB communication scheme) by using the UWB communication scheme. Alternatively, the electronic device 101 not recognizing the other electronic device (e.g., the second external device 420) may refer to that the electronic device 101 and the other electronic device (e.g., the second external device 420) have transmitted at least a part of the messages (e.g., a ranging poll message, a ranging response message, and/or a ranging final message of a UWB communication scheme) by using the UWB communication scheme, but do not receive a response message in response to the transmitted message. Alternatively, the electronic device 101 not recognizing the other electronic device (e.g., the second external device 420) may refer to that the electronic device 101 and the other electronic device (e.g., the second external device 420) have transmitted at least a part of the messages (e.g., a ranging poll message, a ranging response message, and/or a ranging final message of a UWB communication scheme) by using the UWB communication scheme, but identifies that a relative position between the electronic device 101 and the other electronic device (e.g., the second external device 420) does not fall within a configured range, based on an angle of arrival (AOA) scheme, a single-sided two-way ranging (SS-TWR) scheme, and/or a double-sided two-way ranging (DS-TWR) scheme, so as to determine that the electronic device 101 and the other electronic device (e.g., the second external device 420) are not connected to (or recognized by) each other. An operation of the electronic device 101 recognizing or not recognizing the other electronic device (e.g., the first external device 410 and/or the second external device 420 of FIG. 4) will be discussed later with reference to FIGS. 6 and 8.

According to an embodiment, a configured range in which the electronic device 101 recognizes another electronic device (e.g., the first external device 410) by using the first communication module 291 is configured by a user input. For example, based on a user input, the electronic device 101 may change a configured range configured to recognize another electronic device (e.g., the first external device 410). For example, in the case of identifying the configured user input, the electronic device 101 may change the configured range (e.g., may widen the configured range), and in the case of identifying a reconfigured user input, the electronic device may change the reconfigured range (for example, may narrow the configured range). Alternatively, for example, the electronic device 101 may sequentially change a configured range according to the number of times of the configured user inputs.

In operation 307, the electronic device 101 according to various embodiments may identify whether the at least one external device (e.g., the first external device 410 of FIG. 4) recognized according to operation 305 is a device capable of performing the function selected according to operation 303 (e.g., the function corresponding to the first object 451 of FIG. 4).

According to an embodiment, the electronic device 101 may identify, based on information stored in the memory 130, whether the recognized at least one external device (e.g., the first external device 410 of FIG. 4) is a device capable of performing the selected function (e.g., the function corresponding to the first object 451 of FIG. 4). For example, the electronic device 101 may store information about the at least one external device (e.g., the first external device 410 and/or the second external device 420 of FIG. 4) in the memory 130. For example, the electronic device 101 may store, in the memory 130, information associated with at least one function that the at least one external device (e.g., the first external device 410 and/or the second external device 420 of FIG. 4) may perform, and there are no limitations on the form of the information stored in the memory 130. For example, the electronic device 101 may receive, from the at least one external device (e.g., the first external device 410 and/or the second external device 420 of FIG. 4), information associated with at least one function that the at least one external device (e.g., the first external device 410 and/or the second external device 420 of FIG. 4) is capable of performing, and store the received information in the memory 130. Alternatively, in another example, the electronic device 101 may receive information associated with at least one function that the at least one external device (e.g., the first external device 410 and/or the second external device 420 of FIG. 4) is capable of performing, from a server (e.g., the server 108 of FIG. 1 or a server 508 of FIG. 5) connected to the at least one external device (e.g., the first external device 410 and/or the second external device 420 of FIG. 4), and store the received information in the memory 130. According to an embodiment, the electronic device 101 may identify, based on information associated with at least one function that the at least one external device (e.g., the first external device 410 and/or the second external device 420 of FIG. 4) is capable of performing and stored in the memory 130, whether the recognized at least one external device (e.g., the first external device 410 of FIG. 4) is a device capable of performing a selected function (e.g., a function corresponding to the first object 451 of FIG. 4).

According to another embodiment, the electronic device 101 may identify, by using a server (e.g., the server 108 of FIG. 1 or a server 508 of FIG. 5) connected to the recognized at least one external device (e.g., the first external device 410 of FIG. 4), whether the recognized at least one external device (e.g., the first external device 410 of FIG. 4) is a device capable of performing the selected function (e.g., a function corresponding to first object 451 of FIG. 4). For example, referring to FIG. 4, the electronic device 101 may transmit, by using at least a part of the communication module 190, a signal requesting identification of whether the first external device 410 is a device capable of performing a function corresponding to the first object 451 to the server (e.g., the server 108 of FIG. 1 or the server 508 of FIG. 5). For example, the electronic device 101 may receive, from the server (e.g., the server 108 of FIG. 1 or the server 508 of FIG. 5), by using at least a part of the communication modules 190, a response signal including information associated with whether the first external device 410 is a device capable of performing a function corresponding to the first object 451. For example, the electronic device 101 may identify, based on a response signal received from the server (e.g., the server 108 in FIG. 1 or server 508 in FIG. 5), whether the first external device 410 is a device capable of performing a function corresponding to the first object 451. In another example, the electronic device 101 may receive, from an external device (e.g., the first external device 410 and/or the second external device 420 of FIG. 4), a signal that includes information about a function supported, and may identify a function supported by the external device based on the received signal. The electronic device 101 may determine whether the selected function (e.g., a function corresponding to the first object 451 of FIG. 4) is included in functions supported by the external device (e.g., the first external device 410, and/or the second external device 420 of FIG. 4). As another example, the electronic device 101 may transmit, to an external device (e.g., the first external device 410 of FIG. 4, and/or the second external device 420 of FIG. 4), a signal inquiring whether the external device supports the selected function (e.g., the function corresponding to the first object 451 of FIG. 4), and may determine whether the external device supports the selected function (e.g., the function corresponding to the first object 451 of FIG. 4) based on a response signal from the external device.

In operation 309, the electronic device 101 according to various embodiments may transmit, based on the recognized at least one external device (e.g., the first external device 410 of FIG. 4) being capable of performing a selected function (e.g., a function corresponding to the first object 451 of FIG. 4), at least one control request signal requesting to deliver a control signal for performing the selected function (e.g., the function corresponding to the first object 451 of FIG. 4) to the recognized at least one external device (e.g., the first external device 410 of FIG. 4), by using at least a part of the communication module 190, to the server (e.g., the server 108 of FIG. 1 or server 508 of FIG. 5) connected to the recognized at least one external device (e.g., the first external device 410 of FIG. 4). For example, the server (e.g., the server 108 of FIG. 1 or server 508 of FIG. 5) may transmit, based on the control request signal received from the electronic device 101, a control signal for performing the selected function (e.g., the function corresponding to the first object 451 of FIG. 4) to at least one external device (e.g., the first external device 410 of FIG. 4).

FIG. 5 illustrates an operation of an electronic device according to various embodiments.

Referring to FIG. 5, an electronic device 101, a tag device (e.g., a first tag device 521 or a second tag device 522), a target device (e.g., a first target device 511, a second target device 512, a third target device 513, or a fourth target device 514), and a server 508 (e.g., the server 108 of FIG. 1) are shown. According to an embodiment, a tag device is a device capable of performing communication using a UWB communication scheme, and may refer to a device configured to be mapped to a target device. A target device may refer to a device that performs a selected function. According to an embodiment, the target device may or may not perform communication using a UWB communication scheme. The target devices (e.g., the first target device 511, the second target device 512, the third target device 513, and the fourth target device 514) may be the same or similar types of devices as the first external device 410 and second external device 420 of FIG. 4. The tag devices (e.g., the first tag device 521 and the second tag device 522) and the target devices (e.g., the first target device 511, the second target device 512, the third target device 513, and the fourth target device 514) may be electronic devices of the same or similar type as the electronic device 101, or may be electronic devices of a different type from the electronic device 101. There is no limitation on the types of tag devices (e.g., the first tag device 521 and the second tag device 522) and target devices (e.g., the first target device 511, the second target device 512, the third target device 513, and the fourth target device 514).

A method in which the electronic device 101 directly or indirectly recognizes at least one external device located in the periphery may be understood by referring to FIG. 5.

According to various embodiments, the electronic device 101 (e.g., the processor 120) may directly recognize at least one external device (e.g., the third target device 513, and/or the fourth target device 514) by using the first communication module 291. For example, the third target device 513 and/or the fourth target device 514 may be a device capable of performing communication based on a UWB communication scheme. For example, the electronic device 101 may recognize the third target device 513 and/or the fourth target device 514 by using the first communication module 291.

According to various embodiments, the electronic device 101 (e.g., the processor 120) may indirectly recognize at least one external device (e.g., the first target device 511 and/or the second target device 512) using the first communication module 291. Indirect recognition of the other electronic device (e.g., the first target device 511 and/or second target device 512) by the electronic device 101 may refer to that the electronic device 101 recognizes a tag device (e.g., the first tag device 521 and/or second tag device 522) associated with the other electronic device (e.g., the first target device 511 and/or second target device 512). For example, the first target device 511 and/or the second target device 512 may be devices that are not capable of communicating based on the UWB communication scheme. The first tag device 521 is a device capable of communicating based on the UWB communication scheme, and may be a device mapped to the first target device 511. The second tag device 522 may be a device capable of performing communication based on the UWB communication scheme, and may be a device mapped to the second target device 512. In this case, the electronic device 101 may recognize the first tag device 521 and/or the second tag device 522 by using the first communication module 291.

According to an embodiment, when the electronic device 101 recognizes a tag device (e.g., the first tag device 521 and/or second tag device 522) by using the first communication module 291, the electronic device 101 may identify a target device (e.g., the first target device 511 and/or second target device 512) associated (mapped) with the tag device. Identifying, by the electronic device 101, a target device mapped to a tag device may include identifying whether a target device mapped to a tag device is a device capable of performing a selected function, and embodiments of determining whether a device is capable of performing a selected function have been described above. For example, the electronic device 101 may store mapping information for at least one tag device and at least one target device mapped to the at least one tag device in the memory 130. For example, the electronic device 101 may receive mapping information for the at least one tag device (e.g., the first tag device 521 and/or the second tag device 522) and the at least one target device (e.g., the first target device 511 and/or the second target device 512) mapped to the at least one tag device, respectively, from the at least one tag device (e.g., the first tag device 521 and/or the second tag device 522) or the at least one target device (e.g., the first target device 511 and/or the second target device 512) mapped to the at least one tag device, respectively, and store the received mapping information in the memory 130. Alternatively, in another example, the electronic device 101 may receive mapping information for the at least one tag device (e.g., the first tag device 521 and/or the second tag device 522) and the at least one target device (e.g., the first target device 511 and/or the second target device 512) mapped to the at least one tag device, respectively, from a server 508 connected to the at least one target device (e.g., the first target device 511 and/or the second target device 512), and store the received mapping information in the memory 130. For example, when the electronic device 101 recognizes the first tag device 521 using the first communication module 291, the electronic device may identify the first target device 511 mapped to the first tag device 521 based on the mapping information stored in the memory 130. In another example, when the electronic device 101 recognizes tag devices (e.g., the first tag device 521 and/or the second tag device 522) using the first communication module 291, the electronic device 101 may transmit, to a server (e.g., the server 108 of FIG. 1 or server 508 of FIG. 5), a request for identification of target devices (e.g., the first target device 511 and/or second target device 512) mapped to the recognized tag devices (e.g., the first tag device 521 and/or second tag device 522), by using at least a part of the communication module 190.

In response to directly or indirectly recognizing at least one target device, the electronic device 101 according to various embodiments may control a control signal to be delivered to the recognized target device. Upon receiving the control signal, the target device may perform a selected function based on the control signal. For example, the control signal may include information about the selected function, and/or information about a target device to perform the selected function.

For example, referring to FIG. 5, the electronic device 101 may recognize the third target device 513 using the first communication module 291. The electronic device 101 may identify whether the recognized third target device 513 is a device capable of performing a selected function (e.g., a function corresponding to the first object 451 of FIG. 4). Based on the third target device 513 being capable of performing the selected function, the electronic device 101 may generate a control signal for performing the selected function. The electronic device 101 may transmit the control signal for performing the selected function to the third target device 513, by using at least a part of the communication module 190.

In another example, the electronic device 101 may recognize the fourth target device 514 using the first communication module 291. The electronic device 101 may identify whether the recognized fourth target device 514 is a device capable of performing a selected function (e.g., a function corresponding to the first object 451 of FIG. 4). Based on that the fourth target device 514 is capable of performing the selected function, the electronic device 101 may generate a control signal for performing the selected function of the fourth target device 514 or a control request signal. The control request signal may refer to a signal requesting to transmit the control signal. For example, the control request signal may include information about the selected function and/or information about a target device to perform the selected function. The electronic device 101 may transmit the control signal for performing the selected function or the control request signal to a server 508 (e.g., the server 108 in FIG. 1), by using at least a part of the communication module 190. Based on receiving the control signal for performing the selected function, the server 508 (e.g., the server 108 of FIG. 1) may deliver the control signal for performing the selected function to the fourth target device 514. Alternatively, the server 508 (e.g., the server 108 of FIG. 1) may, based on receiving the control request signal, generate a control signal for performing the selected function and transmit the control signal for performing the selected function to the fourth target device 514.

In another example, the electronic device 101 may recognize the first tag device 521 using the first communication module 291. The electronic device 101 may identify a first target device 511 mapped to the recognized first tag device 521. The electronic device 101 may identify whether the first target device 511 is a device capable of performing a selected function (e.g., a function corresponding to the first object 451 of FIG. 4). Based on the first target device 511 being capable of performing the selected function, the electronic device 101 may generate a control signal for performing the selected function. The electronic device 101 may transmit the control signal for performing the selected function to the first target device 511, by using at least a part of the communication module 190. In another example, the electronic device 101 may transmit, by using at least a part of the communication module 190, a control signal for performing the selected function to the first tag device 521, and the first tag device 521 may transmit the control signal to the first target device 511. As another example, the electronic device 101 may transmit a signal requesting to transmit the control signal to the first target device 511 to the first tag device 521, by using at least a part of the communication module 190.

In another example, the electronic device 101 may recognize the second tag device 522 using the first communication module 291. The electronic device 101 may identify a second target device 512 mapped to the recognized second tag device 522. The electronic device 101 may identify whether the second target device 512 is a device capable of performing a selected function (e.g., a function corresponding to the first object 451 of FIG. 4). Based on the second target device 512 being capable of performing the selected function, the electronic device 101 may generate a control signal for performing the selected function of the second target device 512 or a control request signal. The electronic device 101 may transmit the control signal for performing the selected function or the control request signal to the server 508 (e.g., the server 108 of FIG. 1), by using at least a part of the communication module 190. Based on receiving the control signal for performing the selected function, the server 508 (e.g., the server 108 of FIG. 1) may deliver the control signal for performing the selected function to the second target device 512. Alternatively, the server 508 (e.g., the server 108 of FIG. 1) may, based on receiving the control request signal, generate a control signal for performing the selected function and transmit the control signal for performing the selected function to the second target device 512.

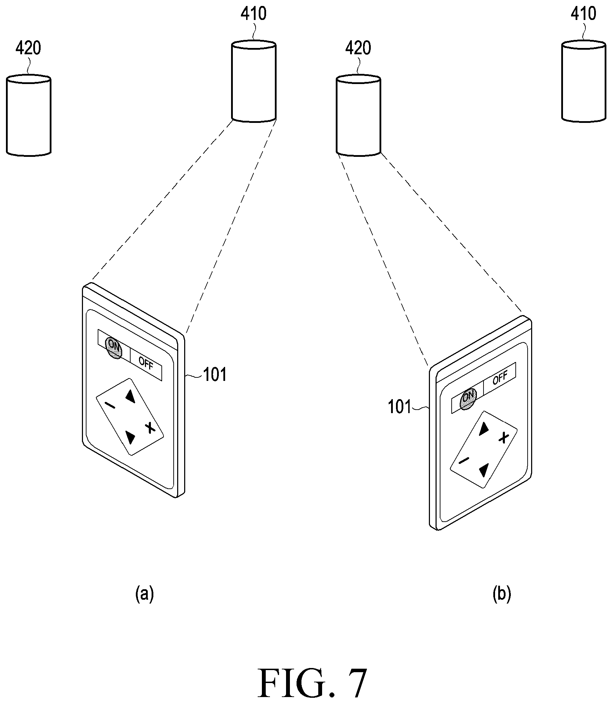

FIG. 6 is a flow diagram illustrating an operation of an electronic device according to various embodiments. FIG. 6 will be described with reference to FIG. 7. FIG. 7 illustrates an operation of an electronic device according to various embodiments. (a) of FIG. 7 illustrates the electronic device 101 being aimed at a first external device 410 (e.g., a first target device 691), and (b) of FIG. 7 illustrates the electronic device 101 being aimed at a second external device 420 (e.g., a second target device 692).

The first target device 691 and/or second target device 692 of FIG. 6 may be the same or a similar type of electronic device as the first target device 511, second target device 512, third target device 513, and/or fourth target device 514 of FIG. 5.

Referring to FIG. 6, in operation 601, the electronic device 101 (e.g., the processor 120) according to various embodiments may identify a selection of at least one (e.g., a function corresponding to the first object 451 of FIG. 4) of at least one function.

In operation 603, the electronic device 101 according to various embodiments may transmit a UWB broadcast signal, by using the first communication module 291, based on the selection of at least one (e.g., a function corresponding to the first object 451 of FIG. 4) of the at least one function.

In operation 605 and/or 607, the electronic device 101 according to various embodiments may receive a response signal to the UWB broadcast signal from the first target device 691 and/or the second target device 692, by using the first communication module 291.

The electronic device 101 transmitting a UWB broadcast signal may refer to as the electronic device 101 performing a UWB scan operation. Alternatively, the electronic device 101 transmitting the UWB broadcast signal and receiving the response signal to the UWB broadcast signal may refer to as the electronic device 101 performing the UWB scan operation. Accordingly, referring to operation 601, operation 603, and/or operation 605, the electronic device 101 may perform a UWB scan using the first communication module 291, based on that at least one (e.g., the function corresponding to the first object 451 of FIG. 4) of the at least one function is selected. For example, in case that the at least one external device (e.g., the first target device 691 and/or the second target device 692) is scanned through a UWB scan operation of the electronic device 101, the electronic device 101 may identify that the at least one external device (e.g., the first target device 691 and/or the second target device 692) is located around the electronic device 101. UWB scanning operation and recognition operation through UWB communication may be distinguished. For example, the identification of the first target device 691 by the electronic device 101 through the UWB scan operation may refer to that the electronic device 101 has identified that the first target device 691 is located around the electronic device. Recognition of the first target device 691 by the electronic device 101 through UWB communication may refer to that, based on the electronic device 101 being aimed at the first target device 691, the electronic device 101 has identified that a relative position between the electronic device 101 and the first target device 691 falls within a configured range. Although the UWB scan operation and the recognition operation through UWB communication have been described separately, this is for convenience of explanation, and the UWB scan operation may be referred to as being included in the recognition operation through UWB communication. For example, performing the recognition operation through UWB communication by the electronic device 101 may refer to that the electronic device 101 performs a UWB scan operation and recognizes the at least one external device (e.g., the first target device 691) located in the periphery, through UWB communication. For example, the electronic device 101 may recognize the at least one external device (e.g., the first target device 691) located in the periphery, by using the first communication module 291, based on the selection of at least one (e.g., a function corresponding to the first object 451 of FIG. 4) of the at least one function. Alternatively, according to an embodiment, the electronic device 101 may perform a UWB scan operation to identify the at least one external device (e.g., the first target device 691) located in the periphery and, after identifying that at least one (e.g., a function corresponding to the first object 451 of FIG. 4) of the at least one function is selected, perform a UWB recognition operation.

In operation 609, the electronic device 101 according to various embodiments may recognize the first target device 691 using the first communication module 291. For example, the electronic device 101 may recognize the first target device 691 using the first communication module 291 based on that a relative position between the electronic device 101 and the first target device 691 falls within a configured range. For example, referring to FIG. 7, based on the electronic device 101 being aimed at the first external device 410 (e.g., the first target device 691), the electronic device 101 may recognize the first external device 410 (e.g., the first target device 691) by using the first communication module 291.

In operation 611, upon recognizing the first target device 691, the electronic device 101 according to various embodiments may identify the first target device 691. For example, the electronic device 101 may identify whether the first target device 691 is capable of performing a selected function (e.g., a function corresponding to the first object 451 of FIG. 4).

In operation 613, the electronic device 101 according to various embodiments may request the server 508 to transmit a control signal to the first target device 691. For example, the electronic device 101 may transmit, based on the first target device 691 being capable of performing the selected function (e.g., a function corresponding to the first object 451 of FIG. 4), by using at least a part of the communication module 190, to the server 508, a signal (e.g., a control request signal, or a control signal) including information about the selected function (a function corresponding to the first object 451 of FIG. 4) and information about a target device (e.g., the first target device 691) to perform the selected function.

In operation 615, the server 508 according to various embodiments may, based on receiving a request from the electronic device 101 to transmit a control signal to the first target device 691, transmit a control signal to perform a selected function (e.g., a function corresponding to the first object 451 of FIG. 4) to the first target device 691.

In operation 617, the electronic device 101 according to various embodiments may recognize the second target device 692 by using the first communication module 291. For example, the electronic device 101 may recognize the second target device 692 by using the first communication module 291, based on that a relative position between the electronic device 101 and the second target device 692 falls within a configured range. For example, referring to FIG. 7, based on the electronic device 101 being aimed at the second external device 420 (e.g., the second target device 692), the electronic device 101 may recognize the second external device 420 (e.g., the second target device 692) by using the first communication module 291.

In operation 619, the electronic device 101 according to various embodiments may identify the second target device 692. For example, the electronic device 101 may identify whether the second target device 692 is capable of performing a selected function (e.g., a function corresponding to the first object 451 of FIG. 4).

In operation 621, the electronic device 101 according to various embodiments may request the server 508 to transmit a control signal to the second target device 692.

In operation 623, the server 508 according to various embodiments may, based on receiving a request from the electronic device 101 to transmit a control signal to the second target device 692, transmit a control signal to the second target device 692 to perform a selected function (e.g., a function corresponding to the first object 451 of FIG. 4).

FIG. 8 is a flow diagram to illustrate operation of an electronic device according to various embodiments. A tag device 891 of FIG. 8 may be the same or a similar type of electronic device as the second tag device 522 of FIG. 5. A target device 881 of FIG. 8 may be the same or a similar type of electronic device as the second target device 512 of FIG. 5.

Referring to FIG. 8, in operation 801, the electronic device 101 (e.g., the processor 120) according to various embodiments may be identified to select at least one (e.g., a function corresponding to the first object 451 of FIG. 4) of the at least one function.

In operation 803, the electronic device 101 according to various embodiments may establish a communication connection (e.g., a BLE communication connection) with the tagging device 891 using the second communication module 292, based on that at least one (e.g., a function corresponding to the first object 451 of FIG. 4) of the at least one function has been selected.

In operation 805, the electronic device 101 according to various embodiments may transmit, to the tag device 891, a signal requesting activation of a communication module supporting the UWB communication scheme of the tag device 891, via the communication connection (e.g., a BLE communication connection) using the second communication module 292.

In operation 807, the tag device 891 according to various embodiments may activate a UWB communication module (not shown) of the tag device 891 based on receiving a signal requesting activation of a communication module (not shown) supporting the UWB communication scheme from the electronic device 101.

In operation 809, the tag device 891 according to various embodiments may transmit a UWB broadcast signal.

In operation 811, the electronic device 101 according to various embodiments may transmit a response signal to the UWB Broadcast signal to the tag device 891, by using the first communication module 291.

According to another embodiment, unlike operations 809 and 811, the electronic device 101 may transmit a UWB broadcast signal and the tag device 891 may transmit a response signal to the UWB broadcast signal.

In operation 813, the electronic device 101 according to various embodiments may recognize the tag device 891 using the first communication module 291.

In operation 815, the electronic device 101 according to various embodiments may identify a target device 881 mapped to the tag device 891 based on recognizing the tag device 891. For example, based on recognizing the tag device 891, the electronic device 101 may identify whether the target device 881 mapped to the tag device 891 is capable of performing a selected function (e.g., a function corresponding to the first object 451 of FIG. 4).

In operation 817, the electronic device 101 according to various embodiments may request the server 508 to transmit a control signal to the target device 881. For example, the electronic device 101 may transmit, based on the target device 881 being capable of performing the selected function (e.g., a function corresponding to the first object 451 of FIG. 4), by using at least a part of the communication module 190, to the server 508, a signal (e.g., a control request signal or control signal) including information about a selected function (e.g., a function corresponding to the first object 451 of FIG. 4 and information about a target device (e.g., the target device 881) to perform the selected function.

In operation 819, the server 508 according to various embodiments may transmit a control signal to the target device 881 to perform a selected function (e.g., a function corresponding to the first object 451 of FIG. 4) based on receiving a request from the electronic device 101 to transmit the control signal to the target device 881.

Referring to FIGS. 5 and 8, according to an embodiment, in case that a UWB communication module (not shown) of a tag device (e.g., the second tag device 522 of FIG. 5) is activated, the electronic device 101 may recognize a tag device (e.g., the second tag device 522 of FIG. 5) using the first communication module 291 when at least one (e.g., the function corresponding to the first object 451 of FIG. 4) of the at least one function is selected. According to another embodiment, in case that the UWB communication module (not shown) of the tag device (e.g., the tag device 891 of FIG. 8) is not activated, the electronic device 101 may, based on selecting at least one (e.g., a function corresponding to the first object 451 of FIG. 4) of the at least one function, by using the second communication module 292, transmit a signal requesting activation of a UWB communication module (not shown) to the tag device (e.g., the tag device 891 of FIG. 8), and then recognize the tag device (e.g., the tag device 891 of FIG. 8) using the first communication module 291.

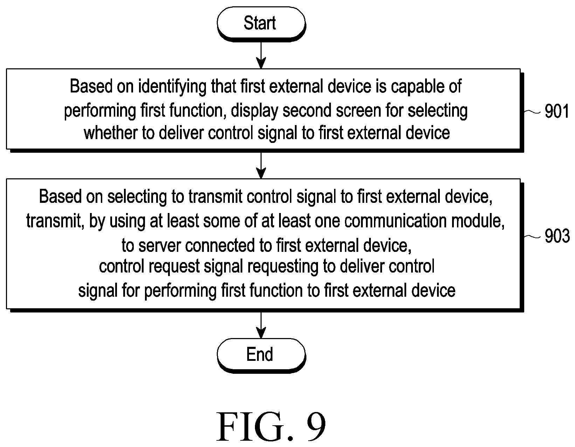

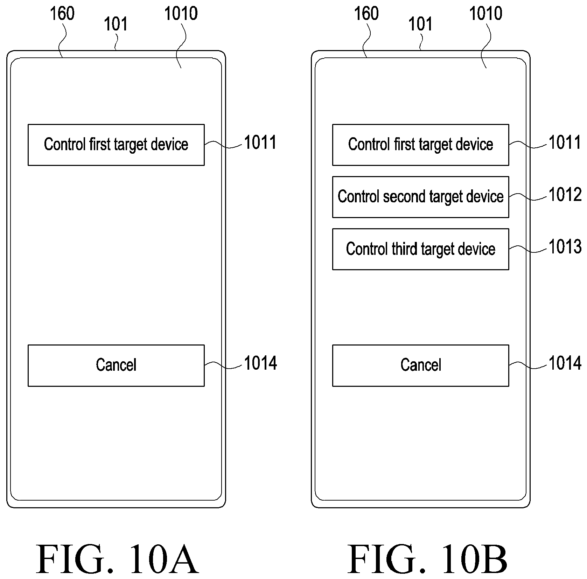

FIG. 9 is a flowchart illustrating a method of operating an electronic device according to various embodiments. FIG. 9 will be described with reference to FIG. 10A. FIG. 10A illustrates an operation method of an electronic device according to various embodiments.

Referring to FIG. 9, in operation 901, based on identifying that an external device (e.g., the first external device 410 of FIG. 4) is capable of performing a selected function (e.g., a function corresponding to first object 451 of FIG. 4), the electronic device 101 (e.g., the processor 120) according to various embodiments may display a screen (e.g., a screen 1010 of FIG. 10A) for selecting whether to deliver a control signal for performing the selected function (e.g., a function corresponding to first object 451 of FIG. 4) to an external device (e.g., the first external device 410 of FIG. 4). For example, referring to FIG. 10A, the electronic device 101 may display, on the display module 160, the screen 1010 for selecting whether to deliver a control signal for performing a selected function (e.g., a function corresponding to the first object 451 of FIG. 4) to an external device (e.g., the first external device 410 of FIG. 4). For example, the screen 1010 for selecting whether to transmit the control signal may include a button 1011 for transmitting the control signal and/or an object 1014 that indicates not transmitting the control signal.

In operation 903, based on selecting to transmit a control signal to perform a selected function (e.g., a function corresponding to the first object 451 of FIG. 4) to an external device (e.g., the first external device 410 of FIG. 4) while the screen 1010 for selecting whether to transmit the control signal is displayed, the electronic device 101 according to various embodiments may transmit, by using at least a part of the communication module 190, to a server (e.g., the server 508 of FIG. 5) connected to the external device (e.g., the first external device 410 of FIG. 4), a signal (e.g., a control request signal or control signal) requesting to deliver the control signal for performing the selected function (e.g., a function corresponding to the first object 451 of FIG. 4) to the external device (e.g., the first external device 410 of FIG. 4).

According to another embodiment, the electronic device 101 may output configured feedback (e.g., haptic feedback, sound feedback, and/or LED feedback) based on identifying that the external device (e.g., the first external device 410 of FIG. 4) is capable of performing a selected function (e.g., a function corresponding to the first object 451 of FIG. 4). After outputting the configured feedback, the electronic device 101 may, in response to detecting a configured movement of the electronic device 101 (e.g., a movement that momentarily shakes the electronic device 101 by a configured number of times), transmit, by using at least a part of the communication module 190, to a server connected to an external device (e.g., the first external device 410 of FIG. 4, server 508 of FIG. 5), a signal (e.g., a control request signal or control signal) requesting a control signal for performing a selected function (e.g., a function corresponding to the first object 451 of FIG. 4) to be delivered to the external device (e.g., the first external device 410 of FIG. 4).

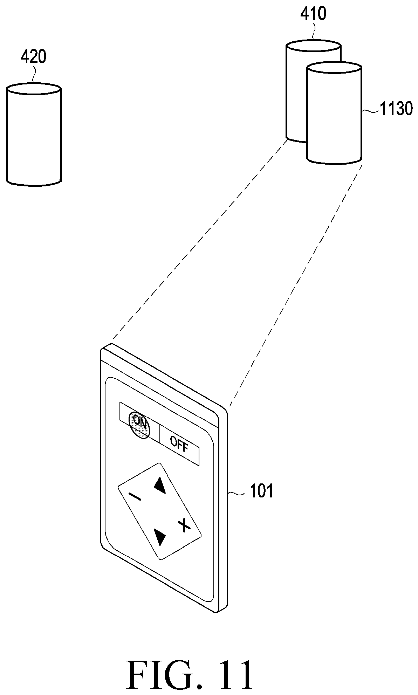

FIG. 10B illustrates the operation of an electronic device according to various embodiments. FIG. 10B will now be described with reference to FIG. 11. FIG. 11 illustrates the operation of an electronic device according to various embodiments.

FIG. 11 illustrates the electronic device 101 recognizing both a first external device 410 and a third external device 1130 when the first external device 410 and the third external device 1130 are located in close proximity. Recognizing both the first external device 410 and the third external device 1130 by the electronic device 101 may refer to identifying that a relative position between the electronic device 101 and the first external device 410 falls within a configured range, and a relative position between the electronic device 101 and the third external device 1130 falls within a configured range.

Referring to FIGS. 10B and 11, the electronic device 101 (e.g., the processor 120) according to various embodiments may recognize both the first external device 410 and the third external device 1130. The electronic device 101 may identify whether the first external device 410 (or a first target device (not shown) mapped to the first external device 410 when the first external device 410 is a tag device), and the third external device 1130 (or a second target device (not shown) mapped to the third external device 1130 when the third external device 1130 is a tag device) are devices capable of performing a selected function (e.g., a function corresponding to the first object 451 of FIG. 4). Based on identifying that the first external device 410 (or a first target device (not shown) mapped to the first external device 410 when the first external device 410 is a tag device), and the third external device 1130 (or a second target device (not shown) mapped to the third external device 1130 when the third external device 1130 is a tag device) are capable of performing a selected function (e.g., a function corresponding to the first object 451 of FIG. 4), the electronic device 101 may display a screen (e.g., the screen 1010 of FIG. 10B) for selecting whether to deliver a control signal to at least one of the first external device 410 (or a first target device (not shown) mapped to the first external device 410 when the first external device 410 is a tag device), or the third external device 1130 (or a second target device (not shown) mapped to the third external device 1130 when the third external device 1130 is a tag device). For example, referring to FIG. 10B, the screen 1010 for selecting whether to deliver the control signal may include an object 1011 indicating delivery of the control signal to a first target device (e.g., the first external device 410, or a first target device (not shown) mapped to the first external device 410 when the first external device 410 is a tag device), an object 1012 indicating delivery of the control signal to a second target device (e.g., the third external device 1130, or a second target device (not shown) mapped to the third external device 1130 when the third external device 1130 is a tag device), an object 1013 indicating delivery of the control signal to the first target device and the second target device, and/or an object 1014 indicating not delivering the control signal.

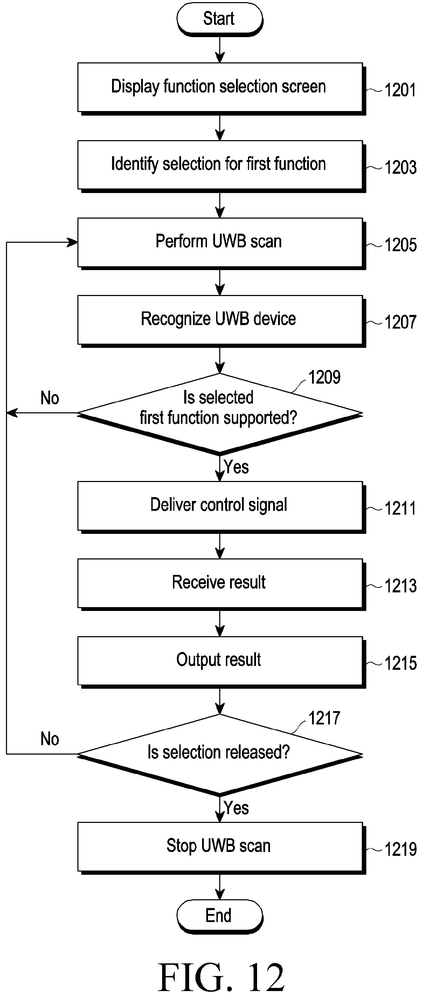

FIG. 12 is a flowchart illustrating an operation of an electronic device according to various embodiments.

Referring to FIG. 12, in operation 1201, the electronic device 101 (e.g., the processor 120) according to various embodiments may display a function selection screen. For example, the electronic device 101 may display a function selection screen based on a user input requesting display of the function selection screen. Alternatively, for example, the electronic device 101 may display the function selection screen, based on a state of the electronic device 101 corresponding to a configured state. For example, the electronic device 101 may display the function selection screen based on the electronic device 101 being communication connected with a configured external device. Alternatively, for example, the electronic device 101 may display the function selection screen based on a location of the electronic device 101 being within a configured location range. Alternatively, for example, the electronic device 101 may identify a current time and display the function selection screen based on the current time corresponding to a configured time. For example, the electronic device 101 may display the function selection screen during a configured period of time after identifying that the state of the electronic device 101 corresponds to the configured state.

In operation 1203, the electronic device 101 according to various embodiments may identify a selection of a first function from among the at least one function while the function selection screen is displayed.

In operation 1205, the electronic device 101 according to various embodiments may perform a UWB scan operation using the first communication module 291, based on the selection of the first function.

In operation 1207, the electronic device 101 according to various embodiments may recognize, by using the first communication module 291, at least one external device (e.g., a tag device (e.g., the first tag device 521 or the second tag device 522 of FIG. 5), and/or a target device (e.g., the third target device 513 or the fourth target device 514 of FIG. 5) located around the electronic device 101.

According to an embodiment, the electronic device 101 may output a configured feedback (e.g., haptic feedback, sound feedback, and/or LED feedback) based on recognizing the at least one external device (e.g., a tag device and/or target device) located around the electronic device 101.

In operation 1209, the electronic device 101 according to various embodiments may identify the recognized at least one external device (e.g., a tag device and/or target device). For example, the electronic device 101 may, in case that the recognized device is a target device, identify whether the recognized target device is capable of performing the selected first function. Alternatively, for example, in case that the recognized device is a tag device, the electronic device 101 may identify whether a target device mapped to the recognized tag device is capable of performing the selected first function.

In operation 1211, the electronic device 101 according to various embodiments may perform control to deliver a control signal to the recognized target device and/or the target device mapped to the recognized tag device, based on identifying that the recognized target device and/or the target device mapped to the recognized tag device are capable of performing the selected first function. For example, the electronic device 101 may transmit the control signal directly to the target device, or in another example, the electronic device 101 may transmit a signal requesting to transmit the control signal to the target device to an external device (e.g., a recognized tag device mapped to the target device, or a server (e.g., the server 508 in FIG. 5)). The method for controlling the electronic device 101 to transmit a control signal to a recognized target device and/or a target device mapped to the recognized tag device has been described with reference to FIG. 5.

In operation 1213, the electronic device 101 according to various embodiments may, after performing control to deliver the control signal to the recognized target device and/or the target device mapped to the recognized tag device, receive a report of the result of delivery of the control signal. The control signal delivery result report may include information indicating that the control signal has been successfully delivered, or may include information indicating that successful delivery of the control signal has failed. For example, the electronic device 101 may receive the control signal delivery result report from the target device in case that the electronic device 101 has been delivered the control signal directly to the target device. Alternatively, for example, the electronic device 101 may receive a report of the result of delivery of the control signal from the server (e.g., the server 508 in FIG. 5) in case that the control signal has been delivered to the target device via a server connected to the target device (e.g., the server 508 in FIG. 5).

According to an embodiment, after performing control to deliver the control signal in operation 1211, the electronic device 101 may output a configured feedback (e.g., haptic feedback, sound feedback, and/or LED feedback) indicating that the control signal has been delivered. According to another embodiment, the electronic device 101 may output a configured feedback (e.g., haptic feedback, sound feedback, and/or LED feedback) indicating that the control signal has been delivered after receiving a report of the delivery result of the control signal in operation 1213. The types of configured feedback are exemplary, and the types of feedback are not limited.

In operation 1215, the electronic device 101 according to various embodiments may, based on receiving a report of the result of delivering the control signal, output the result of delivering the control signal. For example, the electronic device 101 may display, on the display module 160, a screen indicating that the control signal has been successfully delivered, or a screen indicating that the successful delivery of the control signal has failed. Alternatively, for example, the electronic device 101 may output a configured first feedback (e.g., haptic feedback, sound feedback, and/or LED feedback) (e.g., a single vibration feedback, or a blue LED feedback) based on the control signal being successfully delivered, and may output a configured second feedback (e.g., haptic feedback, sound feedback, and/or LED feedback) (e.g., two vibration feedbacks, or a red LED feedback) based on the control signal not being successfully delivered. The types of feedback configured are exemplary, and the types of feedback are not limited.

In operation 1217, the electronic device 101 according to various embodiments may determine whether the selection for the first function has been released. According to an embodiment, the electronic device 101 may perform a UWB scanning operation and/or UWB recognition operation from the time after the first function is selected to the time of identifying the release of the selection of the first function.

For example, based on the input of touching the first object 451 among at least one object (e.g., objects 451, 452, and/or 453) included in the function selection screen (e.g., the function selection screen 450 of FIG. 4), the electronic device 101 may identify that the function corresponding to the first object 451 has been selected, and based on the input of touching the first object 451 again, may identify that the selection of the function corresponding to the first object 451 has been released.

Alternatively, for example, the electronic device 101 may identify that the function corresponding to the first object 451 has been selected, based on the continuous input of touching the first object 451 among at least one object (e.g., objects 451, 452, and/or 453) included in the function selection screen (e.g., function selection screen 450 of FIG. 4), and may identify that the selection of the function corresponding to the first object 451 has been released, based on stopping of the continuous touch input to the first object 451.

Alternatively, for example, based on identifying a configured first user utterance while the function selection screen (e.g., function selection screen 450 of FIG. 4) is displayed, the electronic device 101 may identify that a function corresponding to a first object 451 among at least one object (e.g., objects 451, 452, and/or 453) included in the function selection screen (e.g., function selection screen 450 of FIG. 4) has been selected, and based on identifying a configured second user utterance, may identify that the selection of the function corresponding to the first object 451 has been released.

Alternatively, for example, the electronic device 101 may, based on identifying the orientation of a user's eyeball facing the first object 451 among at least one of the objects (e.g., objects 451, 452, and/or 453) included in the function selection screen (e.g., function selection screen 450 of FIG. 4), identify that the function corresponding to the first object 451 has been selected, and based on identifying that the orientation of the user's eyeball is no longer facing the first object 451, may identify that the selection of the function corresponding to the first object 451 has been released.

Alternatively, for example, the electronic device 101 may identify that the selection of the function corresponding to the first object 451 has been released, based on the elapse of a configured period of time from a timepoint of identifying the selection for the function corresponding to the first object 451 among at least one object (e.g., objects 451, 452, and/or 453) included in the function selection screen (e.g., function selection screen 450 in FIG. 4).

In operation 1219, the electronic device 101 according to various embodiments may stop performing the UWB scanning operation and/or the UWB recognition operation, based on identifying that the selection for the first function has been released.

According to an embodiment, although not shown, the function selection screen displayed on the electronic device 101 may include an object (e.g., a copy button) corresponding to a copy function and an object (e.g., a paste button) corresponding to a paste function. The copy function may refer to identifying the state of a particular device (e.g., the first target device 410). Identifying the state of a particular device may also be described as copying the state of the particular device. The paste function may refer to a function of transmitting a control signal including information about the copied state of the specific device to another device (e.g., the second target device 420) so as to configure the state of the other device to be the same as or similar to the copied state of the specific device. For example, the electronic device 101 may, in response to the copy function being selected, identify a state of a first device aimed at by the electronic device 101 and, in response to the paste function being selected, may control a control signal including information associated with the identified state of the first device to be transmitted to a second device aimed at by the electronic device 101. According to FIGS. 2 to 12 and various embodiments, after the electronic device 101 selects the control signal for the second device, if the paste function is not released, the electronic device 101 may control the control signal to be subsequently transmitted to another device (e.g., a third device, and/or a fourth device) aimed at by the electronic device 101. For example, when the copy function is selected, the electronic device 101 may identify a state of the electronic device 101, or a state of an external device aimed at by the electronic device 101 (or, if the external device is a tag device, a target device mapped to the tag device). For example, when the function for copying the state of the electronic device 101 is selected, the electronic device 101 may identify the state of the electronic device 101, and when the function for copying the state of the external device is selected, the electronic device 101 may identify the state of the external device (or, if the external device is a tag device, a target device mapped to the tag device) aimed at by the electronic device 101. Identifying the state of the external device by the electronic device, in response to selection of the copy function, may refer to that the electronic device 101 recognizes, by using UWB communication, the external device by aiming at the external device, and receives information associated with the current state of the external device from the external device or from a server (e.g., the server 108 of FIG. 1 or the server 508 of FIG. 5) connected to the external device. The state of the electronic device 101 and/or the state of the external device may include a power on/off state of a device, a volume configuration state of a device (e.g., a speaker), a channel configuration state of a device (e.g., a TV), a lighting brightness and lighting color configuration state of a device (e.g., a light), an operation mode and temperature configuration state of a device (e.g., an air conditioner), the power on/off scheduling configuration state of a device (e.g., a fan), and the volume, screen brightness, vibration, and communication configurations of a device (e.g., a cell phone), and the state of the device is not limited. For example, when the paste function is selected, the electronic device 101 may control the information including the copied state to be transmitted to another external device aimed at by the electronic device 101. For example, the electronic device 101 may transmit the information including the copied state directly to the other external device aimed at by the electronic device 101, or to a server connected to the other external device aimed at by the electronic device 101 (e.g., the server 108 in FIG. 1 or the server 508 of FIG. 5). For example, the electronic device 101 may, based on that the copy function is selected, identify a state (e.g., light brightness and/or light color) of a first lighting device aimed at by the electronic device 101 and, based on that the paste function is subsequently selected, may control the information including the identified state of the first lighting device to be delivered to a second lighting device aimed at by electronic device 101. As a result, the state of the second lighting device may be configured to be the same or similar as that of the first lighting device.

According to another embodiment, although not shown, the function selection screen displayed on the electronic device 101 may include an object (e.g., a copy button) corresponding to a copy function and may not include an object (e.g., a paste button) corresponding to a paste function. In this case, when the copy function is selected, the same operation is performed as in the embodiment described above that includes both a copy button and a paste button, but since there is no paste button, the electronic device 101 may automatically enter a state in which the paste function is selected even if the copy function is not selected. For example, the electronic device 101 may identify the state of the first device aimed at by the electronic device 101, based on that the copy function is selected. After the electronic device 101 identifies the state of the first device, the electronic device 101 may transition to a state in which the paste function is selected. As the electronic device 101 transitions to the state in which the paste function is selected, the electronic device 101 may control a control signal including information associated with the state of the first device to be subsequently transmitted to another device (e.g., a second device, a third device, and/or a fourth device) to be aimed.

Those skilled in the art may understand that the various embodiments described in this specification can be applied organically to each other within the applicable range. For example, those skilled in the art may understand that at least some operations of an embodiment described in this specification may be omitted and applied, or that at least some operations of an embodiment and at least some operations of another embodiment may be organically connected and applied.

According to various embodiments, an electronic device (e.g., the electronic device 101 of FIGS. 1 and 2) may include at least one communication module (e.g., the communication module 190 of FIGS. 1 and 2) (e.g., the first communication module 291, the second communication module 292, and/or the third communication module 293 of FIG. 2), a display (e.g., the display module 160 of FIGS. 1 and 2), at least one processor (e.g., the processor 120 of FIGS. 1 and 2), and memory (e.g., the memory 130 of FIG. 1) storing instructions. The instructions, when executed by the at least one processor, may be configured to cause the electronic device to control the display to display, on the display, a first screen for selecting at least one of at least one function, identify selection of a first function among the at least one function while the first screen is displayed, recognize, in response to the selection of the first function, at least one external device (e.g., the first target device 511, the second target device 512, the third target device 513, the fourth target device 514, the first tag device 521, and/or the second tag device 522 of FIG. 5) located around the electronic device by using a first communication module (e.g., the first communication module 291 of FIG. 2) supporting an ultra-wideband (UWB) scheme among the at least one communication module, identify whether the at least one external device is capable of performing the first function, and based on the at least one external device being capable of performing the first function, transmit to a server (the server 108 of FIG. 1 or the server 508 of FIG. 5) connected to the at least one external device, by using at least a part of the at least one communication module, at least one control request signal requesting a control signal for performing the first function to be transmitted to the at least one external device.

According to various embodiments, the instructions, when executed by the at least one processor, may be configured to cause the electronic device to recognize the at least one external device based on that a relative position between the electronic device and the at least one external device falls within a configured range.

According to various embodiments, the electronic device further includes memory (e.g., the memory 130 of FIG. 1), wherein the instructions, when executed by the at least one processor, may be configured to cause the electronic device to, based on information stored in the memory, identify whether the at least one external device is a device capable of performing the first function.

According to various embodiments, the instructions, when executed by the at least one processor, may be configured to cause the electronic device to transmit, by using the at least the part of the at least one communication module, to the server, a signal requesting identification of whether the at least one external device is a device capable of performing the first function.

According to various embodiments, the instructions, when executed by the at least one processor, may be configured to cause the electronic device to recognize, in response to the first function being selected, a first external device (e.g., one device among the first target device 511, the second target device 512, the third target device 513, the fourth target device 514, the first tag device 521, and/or the second tag device 522 of FIG. 5) located around the electronic device by using the first communication module, identify whether the first external device is capable of performing the first function, and based on the first external device being capable of performing the first function, by using the at least the part of the at least one communication module, transmit, to the server, a first control request signal requesting the control signal for performing the first function to be transmitted to the first external device, recognize, after transmitting the first control request signal, a second external device (e.g., the other one among the first target device 511, the second target device 512, the third target device 513, the fourth target device 514, the first tag device 521, and/or the second tag device 522 of FIG. 5) located around the electronic device by using the first communication module, identify whether the second external device is capable of performing the first function, and based on the second external device being capable of performing the first function, by using the at least the part of the at least one communication module, transmit, to the server connected to the second external device, a second control request signal requesting the control signal for performing the first function to be transmitted to the second external device.

According to various embodiments, based on that the at least one external device (e.g., the first target device 511, the second target device 512, the third target device 513, the fourth target device 514, the first tag device 521, and/or the second tag device 522 of FIG. 5) is a tag device (e.g., the first tag device 521, and/or the second tag device 522 of FIG. 5), instructions, when executed by the at least one processor, may be configured to cause the electronic device to identify whether a target device (e.g., the first target device 511 or the second target device 512 of FIG. 5) associated with the at least one external device is a device capable of performing the first function, as at least a part of an operation of identifying whether the at least one external device is a device capable of performing the first function.

According to various embodiments, the instructions, when executed by the at least one processor, may be configured to cause the electronic device to, based on that the target device is a device capable of performing the first function, by using the at least the part of the at least one communication module, transmit, to the server connected to the target device, the at least one control request signal requesting the control signal for performing the first function to be transmitted to the target device.

According to various embodiments, the instructions, when executed by the at least one processor, may be configured to cause the electronic device to, in response to the first function being selected, establish a communication connection with the at least one external device located around the electronic device by using a second communication module (e.g., the second communication module 292 of FIG, 2) among the at least one communication module, transmit, to the at least one external device, a signal requesting activation of a communication module supporting a UWB scheme of the at least one external device through the communication connection using the second communication module, and recognize the at least one external device by using the first communication module supporting the UWB scheme.

According to various embodiments, the instructions, when executed by the at least one processor, may be configured to cause the electronic device to, based on that the first external device (e.g., one device among the first target device 511, the second target device 512, the third target device 513, the fourth target device 514, the first tag device 521, and/or the second tag device 522 of FIG. 5) among the at least one external devices is capable of performing the first function, control the display to display a second screen for selection of whether to transmit the control signal to the first external device, and in response to selecting to deliver the control signal to the first external device, by using the at least the part of the at least one communication module, transmit, to the server connected to the first external device, the at least one control request signal requesting the control signal for performing the first function to be transmitted to the first external device.

According to various embodiments, based on that the at least one external device recognized as being located around the electronic device includes the first external device and the second external device (e.g., the other one among the first target device 511, the second target device 512, the third target device 513, the fourth target device 514, the first tag device 521, and/or the second tag device 522 of FIG. 5), and the first external device and the second external device are identified to be able to perform the first function, the second screen includes an item for selecting whether to transmit the control signal to at least one of the first external device or the second external device.

According to various embodiments, the instructions, when executed by the at least one processor, may be configured to cause the electronic device to, based on identifying of the release of the selection of the first function, stop recognizing the at least one external device.

According to various embodiments, the instructions, when executed by the at least one processor, may be configured to cause the electronic device to recognize the at least one external device during a configured period of time from a timepoint at which the selection of the first function is identified.

According to various embodiments, the instructions, when executed by the at least one processor, may be configured to cause the electronic device to, based on a touch input to a first point on the first screen, identify the selection of the first function, and recognize the at least one external device for a period in which the touch input continues.

According to various embodiments, the instructions, when executed by the at least one processor, may be configured to cause the electronic device to, based on recognizing the at least one external device, output a configured first feedback.

According to various embodiments, the instructions, when executed by the at least one processor, may be configured to cause the electronic device to output a configured second feedback indicating that the control signal has been transmitted to the at least one external device.

According to various embodiments, the instructions, when executed by the at least one processor, may be configured to cause the electronic device to, based on user input, control the display to display the first screen.

According to various embodiments, the instructions, when executed by the at least one processor, may be configured to cause the electronic device to, based on the state of the electronic device corresponding to a configured state, control display of the first screen.

According to various embodiments, the first screen may be displayed during a configured period of time from a timepoint at which the state of the electronic device is identified to correspond to the configured state.

According to various embodiments, the configured state may be a state in which the electronic device is communicatively connected with a configured device.

According to various embodiments, an electronic device (e.g., the electronic device 101 of FIGS. 1 and 2) may include at least one communication module (e.g., the communication module 190 of FIGS. 1 and 2) (e.g., the first communication module 291, the second communication module 292, and/or the third communication module 293 of FIG. 2), a display (e.g., the display module 160 of FIGS. 1 and 2), a processor (e.g., the processor 120 of FIGS. 1 and 2), and memory (e.g., the memory 130 of FIG. 1) storing instructions. The instructions, when executed by the at least one processor, may be configured to cause the electronic device to control the display to display, on the display, a first screen for selecting at least one of at least one function, identify selection of a first function among the at least one function while the first screen is displayed, recognize, in response to the selection of the first function, at least one external device (e.g., the first target device 511, the second target device 512, the third target device 513, the fourth target device 514, the first tag device 521, and/or the second tag device 522 of FIG. 5) located around the electronic device by using a first communication module (e.g., the first communication module 291 of FIG. 2) supporting an ultra-wideband (UWB) scheme among the at least one communication module, identify whether the at least one external device is capable of performing the first function, and based on the at least one external device being capable of performing the first function, transmit a control signal for performing the first function to the at least one external device, by using the at least the part of the at least one communication module.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one communication module (291, 292, 293);
a display (160);
at least one processor (120); and
memory (130) storing instructions that, when executed by the at least one processor (120) individually or collectively, cause the electronic device to:
control the display (160) to display, a first screen for selecting at least one of at least one function;
while the first screen is displayed, identify selection of a first function among the at least one function; **characterized in that**
in response to the selection of the first function, recognize at least one external device aimed at by the electronic device using a first communication module (291) supporting an ultra-wideband, UWB, scheme among the at least one communication module (291, 292, 293);
identify whether the at least one external device is capable of performing the first function; and
based on the at least one external device being capable of performing the first function, transmit, to a server (108, 508) connected to the at least one external device, by using at least a part of the at least one communication module (291, 292, 293), at least one control request signal requesting a control signal to be transmitted to the at least one external device, the control signal causing the at least one external device to perform the first function.

2. The electronic device of claim 1, wherein the instructions, when executed by the at least one processor (120) individually or collectively, cause the electronic device to recognize the at least one external device, based on that a relative position between the electronic device and the at least one external device falls within a configured range.

3. The electronic device of claim 1 or 2,
wherein the instructions, when executed by the at least one processor (120) individually or collectively, cause the electronic device to, based on information stored in the memory (130), identify whether the at least one external device is a device capable of performing the first function.

4. The electronic device of any one of claims 1 to 3, wherein the instructions, when executed by the at least one processor (120) individually or collectively, cause the electronic device to transmit, by using the at least the part of the at least one communication module (291, 292, 293), to the server (108, 508), a signal requesting identification of whether the at least one external device is a device capable of performing the first function.

5. The electronic device of any one of claims 1 to 4, wherein the instructions, when executed by the at least one processor (120) individually or collectively, cause the electronic device to:
in response to the selection of the first function, recognize a first external device (691) aimed at by the electronic device using the first communication module (291), identify whether the first external device (691) is capable of performing the first function, and based on the first external device (691) being capable of performing the first function, by using the at least the part of the at least one communication module (291, 292, 293), transmit, to the server (108, 508), a first control request signal requesting the control signal to be transmitted to the first external device (691), the control signal causing the first external device to perform the first function; and
after transmitting the first control request signal, recognize a second external device (692) aimed at by the electronic device using the first communication module (291), identify whether the second external device (692) is capable of performing the first function, and based on the second external device (692) being capable of performing the first function, by using the at least the part of the at least one communication module, transmit, to the server (108, 508) connected to the second external device (692), a second control request signal requesting the control signal to be transmitted to the second external device (692), the control signal causing the second external device to perform the first function.

6. The electronic device of claim 1, wherein the instructions, when executed by the at least one processor (120) individually or collectively, cause the electronic device to, based on that the at least one external device is a tag device (891), identify whether a target device (881) associated with the at least one external device (891) is a device capable of performing the first function, as at least a part of an operation of identifying whether the at least one external device (891) is a device capable of performing the first function.

7. The electronic device of claim 6, wherein the instructions, when executed by the at least one processor (120) individually or collectively, cause the electronic device to, based on that the target device (881) is a device capable of performing the first function, by using the at least the part of the at least one communication module (291, 292, 293), transmit, to the server (108, 508) connected to the target device, the at least one control request signal requesting the control signal to be transmitted to the target device, the control signal causing the target device to perform the first function.

8. The electronic device of claim 1, wherein the instructions, when executed by the at least one processor (120) individually or collectively, cause the electronic device to:
in response to the selection of the first function, establish, using a second communication module (292) among the at least one communication module, a communication connection with the at least one external device (891) aimed at by the electronic device;
transmit, to the at least one external device (891), a signal requesting activation of a communication module supporting the UWB scheme of the at least one external device (891) through the communication connection using the second communication module; and
recognize the at least one external device (891) by using the first communication module supporting the UWB scheme.

9. The electronic device of claim 1, wherein the instructions, when executed by the at least one processor (120) individually or collectively, cause the electronic device to:
based on that a first external device among the at least one external devices is capable of performing the first function, control the display (160) to display a second screen for selection of whether to transmit the control signal to the first external device; and
in response to selecting to transmit the control signal to the first external device, by using the at least the part of the at least one communication module, transmit, to the server connected to the first external device, the at least one control request signal requesting the control signal to be transmitted to the first external device, the control signal causing the first external device to perform the first function.

10. The electronic device of claim 9, wherein, based on that the at least one external device recognized as being aimed at by the electronic device comprises the first external device and a second external device, and that the first external device and the second external device are identified to be able to perform the first function, the second screen comprises an item for selecting whether to transmit the control signal to at least one of the first external device or the second external device.

11. The electronic device of claim 1, wherein the instructions, when executed by the at least one processor (120) individually or collectively, cause the electronic device to, based on identifying a release of the selection of the first function, stop recognizing the at least one external device.

12. The electronic device of claim 1, wherein the instructions, when executed by the at least one processor (120) individually or collectively, cause the electronic device to recognize the at least one external device during a configured period of time from a timepoint at which the selection of the first function is identified.

13. The electronic device of claim 1, wherein the instructions, when executed by the at least one processor (120) individually or collectively, cause the electronic device to:
based on a touch input to a first point on the first screen, identify the selection of the first function; and
recognize the at least one external device during a period in which the touch input continues.

14. The electronic device of claim 1, wherein the instructions, when executed by the at least one processor (120) individually or collectively, cause the electronic device to, based on recognizing the at least one external device, output a configured first feedback.

15. The electronic device of claim 1, wherein the instructions, when executed by the at least one processor (120) individually or collectively, cause the electronic device to output a configured second feedback indicating that the control signal has been transmitted to the at least one external device.

## Patentansprüche

1. Elektronische Vorrichtung, umfassend:
mindestens ein Kommunikationsmodul (291, 292, 293);
eine Anzeige (160);
mindestens einen Prozessor (120); und
Speicher (130), der Anweisungen speichert, die, wenn sie durch den mindestens einen Prozessor (120) einzeln oder zusammen ausgeführt werden, die elektronische Vorrichtung veranlassen:
die Anzeige (160) dazu zu steuern, einen ersten Bildschirm zum Auswählen mindestens einer aus mindestens einer Funktion anzuzeigen;
während der erste Bildschirm angezeigt wird, die Auswahl einer ersten Funktion aus der mindestens einen Funktion zu identifizieren; **gekennzeichnet durch**
Erkennen mindestens einer externen Vorrichtung, die durch die elektronische Vorrichtung anvisiert ist, als Reaktion auf die Auswahl der ersten Funktion unter Verwendung eines ersten Kommunikationsmoduls (291), das ein Ultrabreitband(Ultra-*WideBand* - UWB)-Schema unterstützt, aus dem mindestens einen Kommunikationsmodul (291, 292, 293);
Identifizieren, ob die mindestens eine externe Vorrichtung in der Lage ist, die erste Funktion auszuführen; und
auf der Grundlage dessen, dass die mindestens eine externe Vorrichtung in der Lage ist, die erste Funktion auszuführen, Übertragen mindestens eines Steueranforderungssignals, das die Übertragung eines Steuersignals an die mindestens eine externe Vorrichtung anfordert, an einen mit der mindestens einen externen Vorrichtung verbundenen Server (108, 508) unter Verwendung mindestens eines Teils des mindestens einen Kommunikationsmoduls (291, 292, 293), wobei das Steuersignal die mindestens eine externe Vorrichtung veranlasst, die erste Funktion auszuführen.

2. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen, auf der Grundlage dessen, dass eine relative Position zwischen der elektronischen Vorrichtung und der mindestens einen externen Vorrichtung in einen konfigurierten Bereich fällt, die mindestens eine externe Vorrichtung zu erkennen.

3. Elektronische Vorrichtung nach Anspruch 1 oder 2,
wobei die Anweisungen, wenn sie durch den mindestens einen Prozessor (120) einzeln oder zusammen ausgeführt werden, die elektronische Vorrichtung veranlassen, auf der Grundlage von im Speicher (130) gespeicherten Informationen zu identifizieren, ob die mindestens eine externe Vorrichtung eine Vorrichtung ist, die in der Lage ist, die erste Funktion auszuführen.

4. Elektronische Vorrichtung nach einem der Ansprüche 1 bis 3, wobei die Anweisungen, wenn sie durch den mindestens einen Prozessor (120) einzeln oder zusammen ausgeführt werden, die elektronische Vorrichtung veranlassen, unter Verwendung zumindest des Teils des mindestens einen Kommunikationsmoduls (291, 292, 293), ein Signal an den Server (108, 508) zu übertragen, das eine Identifizierung anfordert, ob die mindestens eine externe Vorrichtung eine Vorrichtung ist, die in der Lage ist, die erste Funktion auszuführen.

5. Elektronische Vorrichtung nach einem der Ansprüche 1 bis 4, wobei die Anweisungen, wenn sie durch den mindestens einen Prozessor (120) einzeln oder zusammen ausgeführt werden, die elektronische Vorrichtung veranlassen:
als Reaktion auf die Auswahl der ersten Funktion eine erste externe Vorrichtung (691), die durch die elektronische Vorrichtung anvisiert ist, unter Verwendung des ersten Kommunikationsmoduls (291) zu erkennen, zu identifizieren, ob die erste externe Vorrichtung (691) in der Lage ist, die erste Funktion auszuführen, und auf der Grundlage dessen, dass die erste externe Vorrichtung (691) in der Lage ist, die erste Funktion auszuführen, unter Verwendung zumindest des Teils des mindestens einen Kommunikationsmoduls (291, 292, 293) ein erstes Steueranforderungssignal, das die Übertragung des Steuersignals an die erste externe Vorrichtung (691) anfordert, an den Server (108, 508) zu übertragen, wobei das Steuersignal die erste externe Vorrichtung veranlasst, die erste Funktion auszuführen; und
nach dem Übertragen des ersten Steueranforderungssignals eine zweite externe Vorrichtung (692), die durch die elektronische Vorrichtung anvisiert ist, unter Verwendung des ersten Kommunikationsmoduls (291) zu erkennen, zu identifizieren, ob die zweite externe Vorrichtung (692) in der Lage ist, die erste Funktion auszuführen, und auf der Grundlage dessen, dass die zweite externe Vorrichtung (692) in der Lage ist, die erste Funktion auszuführen, unter Verwendung zumindest des Teils des mindestens einen Kommunikationsmoduls ein zweites Steueranforderungssignal, das die Übertragung des Steuersignals an die zweite externe Vorrichtung (692) anfordert, an den mit der zweiten externen Vorrichtung (692) verbundenen Server (108, 508) zu übertragen, wobei das Steuersignal die zweite externe Vorrichtung veranlasst, die erste Funktion auszuführen.

6. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen, auf der Grundlage dessen, dass die mindestens eine externe Vorrichtung eine Tag-Vorrichtung (891) ist, zu identifizieren, ob eine mit der mindestens einen externen Vorrichtung (891) verbundene Zielvorrichtung (881) eine Vorrichtung ist, die in der Lage ist, die erste Funktion auszuführen, als zumindest einen Teil eines Vorgangs des Identifizierens, ob die mindestens eine externe Vorrichtung (891) eine Vorrichtung ist, die in der Lage ist, die erste Funktion auszuführen.

7. Elektronische Vorrichtung nach Anspruch 6, wobei die Anweisungen, wenn sie durch den mindestens einen Prozessor (120) einzeln oder zusammen ausgeführt werden, die elektronische Vorrichtung veranlassen, auf der Grundlage dessen, dass die Zielvorrichtung (881) eine Vorrichtung ist, die in der Lage ist, die erste Funktion auszuführen, unter Verwendung zumindest des Teils des mindestens einen Kommunikationsmoduls (291, 292, 293) das mindestens eine Steueranforderungssignal, das die Übertragung des Steuersignals an die Zielvorrichtung anfordert, an den mit der Zielvorrichtung verbundenen Server (108, 508) zu übertragen, wobei das Steuersignal die Zielvorrichtung veranlasst, die erste Funktion auszuführen.

8. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen:
als Reaktion auf die Auswahl der ersten Funktion unter Verwendung eines zweiten Kommunikationsmoduls (292) aus dem mindestens einen Kommunikationsmodul eine Kommunikationsverbindung mit der mindestens einen externen Vorrichtung (891), die von der elektronische Vorrichtung anvisiert ist, herzustellen;
ein Signal, das die Aktivierung eines Kommunikationsmoduls anfordert, das das UWB-Schema der mindestens einen externen Vorrichtung (891) unterstützt, unter Verwendung des zweiten Kommunikationsmoduls über die Kommunikationsverbindung an die mindestens eine externe Vorrichtung (891) zu übertragen; und
unter Verwendung des ersten Kommunikationsmoduls, das das UWB-Schema unterstützt, die mindestens eine externe Vorrichtung (891) zu erkennen.

9. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen:
auf der Grundlage dessen, dass eine erste externe Vorrichtung aus der mindestens einen externen Vorrichtung in der Lage ist, die erste Funktion auszuführen, die Anzeige (160) dazu zu steuern, einen zweiten Bildschirm zur Auswahl, ob das Steuersignal an die erste externe Vorrichtung übertragen werden soll, anzuzeigen; und
als Reaktion auf die Auswahl, das Steuersignal an die erste externe Vorrichtung zu übertragen, das mindestens eine Steueranforderungssignal, das die Übertragung des Steuersignals an die erste externe Vorrichtung anfordert, unter Verwendung zumindest des Teils des mindestens einen Kommunikationsmoduls an den mit der ersten externen Vorrichtung verbundenen Server zu übertragen, wobei das Steuersignal die erste externe Vorrichtung veranlasst, die erste Funktion auszuführen.

10. Elektronische Vorrichtung nach Anspruch 9, wobei auf der Grundlage dessen, dass die mindestens eine externe Vorrichtung, die als durch die elektronische Vorrichtung anvisiert erkannt wird, die erste externe Vorrichtung und eine zweite externe Vorrichtung umfasst und dass die erste externe Vorrichtung und die zweite externe Vorrichtung als in der Lage identifiziert werden, die erste Funktion auszuführen, der zweite Bildschirm ein Element zum Auswählen, ob das Steuersignal an mindestens eine aus der ersten externen Vorrichtung oder der zweiten externen Vorrichtung übertragen werden soll, umfasst.

11. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen, auf der Grundlage des Identifizierens einer Freigabe der Auswahl der ersten Funktion das Erkennen der mindestens einen externen Vorrichtung zu beenden.

12. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen, die mindestens eine externe Vorrichtung während einer konfigurierten Zeitspanne ab einem Zeitpunkt, zu dem die Auswahl der ersten Funktion identifiziert ist, zu erkennen.

13. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen:
auf der Grundlage einer Berührungseingabe an einem ersten Punkt auf dem ersten Bildschirm die Auswahl der ersten Funktion zu identifizieren und
während einer Zeitspanne, in der die Berührungseingabe andauert, die mindestens eine externe Vorrichtung zu erkennen.

14. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen, auf der Grundlage des Erkennens der mindestens einen externen Vorrichtung eine konfigurierte erste Rückmeldung auszugeben.

15. Elektronische Vorrichtung nach Anspruch 1, wobei die Anweisungen, wenn sie durch den mindestens einen Prozessor (120) einzeln oder zusammen ausgeführt werden, die elektronische Vorrichtung veranlassen, eine konfigurierte zweite Rückmeldung auszugeben, die anzeigt, dass das Steuersignal an die mindestens eine externe Vorrichtung übertragen wurde.

## Revendications

1. Dispositif électronique comprenant :
au moins un module de communication (291, 292, 293) ;
un écran (160) ;
au moins un processeur (120) ; et
une mémoire (130) stockant des instructions qui, lorsqu'elles sont exécutées par ledit au moins un processeur (120) individuellement ou collectivement, amènent le dispositif électronique à :
contrôler l'écran (160) pour afficher un premier écran permettant de sélectionner au moins une fonction parmi au moins une fonction ;
pendant que le premier écran est affiché, identifier la sélection d'une première fonction parmi ladite au moins une fonction ; **caractérisé en ce que**
en réponse à la sélection de la première fonction, reconnaître au moins un dispositif externe visé par le dispositif électronique à l'aide d'un premier module de communication (291) prenant en charge un schéma à bande ultra-large (*Ultra-WideBand,* UWB), parmi ledit au moins un module de communication (291, 292, 293) ;
identifier si ledit au moins un dispositif externe est capable d'exécuter la première fonction ; et
sur la base du fait que ledit au moins un dispositif externe est capable d'exécuter la première fonction, transmettre, à un serveur (108, 508) connecté audit au moins un dispositif externe, en utilisant au moins une partie dudit au moins un module de communication (291, 292, 293), au moins un signal de demande de contrôle demandant qu'un signal de contrôle soit transmis audit au moins un dispositif externe, le signal de contrôle amenant ledit au moins un dispositif externe à exécuter la première fonction.

2. Dispositif électronique selon la revendication 1, dans lequel les instructions, lorsqu'elles sont exécutées par ledit au moins un processeur (120) individuellement ou collectivement, amènent le dispositif électronique à reconnaître ledit au moins un dispositif externe, sur la base du fait que la position relative entre le dispositif électronique et ledit au moins un dispositif externe se situe dans une plage configurée.

3. Dispositif électronique selon la revendication 1 ou 2,
dans lequel les instructions, lorsqu'elles sont exécutées par ledit au moins un processeur (120) individuellement ou collectivement, amènent le dispositif électronique, sur la base des informations stockées dans la mémoire (130), à identifier si ledit au moins un dispositif externe est un dispositif capable d'exécuter la première fonction.

4. Dispositif électronique selon l'une quelconque des revendications 1 à 3, dans lequel les instructions, lorsqu'elles sont exécutées par ledit au moins un processeur (120) individuellement ou collectivement, amènent le dispositif électronique à transmettre, en utilisant au moins une partie dudit au moins un module de communication (291, 292, 293), au serveur (108, 508), un signal demandant l'identification de la capacité dudit au moins un dispositif externe à exécuter la première fonction.

5. Dispositif électronique selon l'une quelconque des revendications 1 à 4, dans lequel les instructions, lorsqu'elles sont exécutées par ledit au moins un processeur (120) individuellement ou collectivement, amènent le dispositif électronique à :
en réponse à la sélection de la première fonction, reconnaître un premier dispositif externe (691) visé par le dispositif électronique à l'aide du premier module de communication (291), identifier si le premier dispositif externe (691) est capable d'exécuter la première fonction, et sur la base du fait que le premier dispositif externe (691) est capable d'exécuter la première fonction, à l'aide d'au moins une partie dudit au moins un module de communication (291, 292, 293), transmettre au serveur (108, 508) un premier signal de demande de contrôle demandant que le signal de contrôle soit transmis au premier dispositif externe (691), le signal de contrôle amenant le premier dispositif externe à exécuter la première fonction ; et
après avoir transmis le premier signal de demande de contrôle, reconnaître un second dispositif externe (692) visé par le dispositif électronique à l'aide du premier module de communication (291), identifier si le second dispositif externe (692) est capable d'exécuter la première fonction, et sur la base du fait que le second dispositif externe (692) est capable d'exécuter la première fonction, en utilisant au moins une partie dudit au moins un module de communication, transmettre, au serveur (108, 508) connecté au second dispositif externe (692), un second signal de demande de contrôle demandant que le signal de contrôle soit transmis au second dispositif externe (692), le signal de contrôle amenant le second dispositif externe à exécuter la première fonction.

6. Dispositif électronique selon la revendication 1, dans lequel les instructions, lorsqu'elles sont exécutées par ledit au moins un processeur (120) individuellement ou collectivement, amènent le dispositif électronique, sur la base du fait que ledit au moins un dispositif externe est un dispositif d'étiquetage (891), à identifier si un dispositif cible (881) associé audit au moins un dispositif externe (891) est un dispositif capable d'exécuter la première fonction, en tant qu'au moins une partie d'une opération consistant à identifier si ledit au moins un dispositif externe (891) est un dispositif capable d'exécuter la première fonction.

7. Dispositif électronique selon la revendication 6, dans lequel les instructions, lorsqu'elles sont exécutées par ledit au moins un processeur (120) individuellement ou collectivement, amènent le dispositif électronique, sur la base du fait que le dispositif cible (881) est un dispositif capable d'exécuter la première fonction, à utiliser au moins une partie dudit au moins un module de communication (291, 292, 293), à transmettre, au serveur (108, 508) connecté au dispositif cible, ledit au moins un signal de demande de contrôle demandant que le signal de contrôle soit transmis au dispositif cible, le signal de contrôle amenant le dispositif cible à exécuter la première fonction.

8. Dispositif électronique selon la revendication 1, dans lequel les instructions, lorsqu'elles sont exécutées par ledit au moins un processeur (120) individuellement ou collectivement, amènent le dispositif électronique à :
en réponse à la sélection de la première fonction, établir, à l'aide d'un second module de communication (292) parmi ledit au moins un module de communication, une connexion de communication avec ledit au moins un dispositif externe (891) visé par le dispositif électronique ;
transmettre, audit au moins un dispositif externe (891), un signal demandant l'activation d'un module de communication prenant en charge le schéma UWB dudit au moins un dispositif externe (891) via la connexion de communication à l'aide du second module de communication ; et
reconnaître au moins un dispositif externe (891) à l'aide du premier module de communication prenant en charge le schéma UWB.

9. Dispositif électronique selon la revendication 1, dans lequel les instructions, lorsqu'elles sont exécutées par ledit au moins un processeur (120) individuellement ou collectivement, amènent le dispositif électronique à :
sur la base du fait qu'un premier dispositif externe parmi le dit au moins un dispositif externe est capable d'exécuter la première fonction, contrôler l'affichage (160) pour afficher un second écran permettant de choisir de transmettre ou non le signal de contrôle au premier dispositif externe ; et
en réponse à la sélection de la transmission du signal de contrôle au premier dispositif externe, en utilisant ladite au moins une partie dudit au moins un module de communication, transmettre au serveur connecté au premier dispositif externe ledit au moins un signal de demande de contrôle demandant que le signal de contrôle soit transmis au premier dispositif externe, le signal de contrôle amenant le premier dispositif externe à exécuter la première fonction.

10. Dispositif électronique selon la revendication 9, dans lequel, sur la base du fait que ledit au moins un dispositif externe reconnu comme étant visé par le dispositif électronique comprend le premier dispositif externe et un second dispositif externe, et que le premier dispositif externe et le second dispositif externe sont identifiés comme étant capables d'exécuter la première fonction, le second écran comprend un élément permettant de choisir de transmettre le signal de contrôle à au moins l'un parmi le premier dispositif externe ou le second dispositif externe.

11. Dispositif électronique selon la revendication 1, dans lequel les instructions, lorsqu'elles sont exécutées par ledit au moins un processeur (120) individuellement ou collectivement, amènent le dispositif électronique, sur la base de l'identification d'une libération de la sélection de la première fonction, à cesser de reconnaître ledit au moins un dispositif externe.

12. Dispositif électronique selon la revendication 1, dans lequel les instructions, lorsqu'elles sont exécutées par ledit au moins un processeur (120) individuellement ou collectivement, amènent le dispositif électronique à reconnaître ledit au moins un dispositif externe pendant une période de temps configurée à partir d'un moment où la sélection de la première fonction est identifiée.

13. Dispositif électronique selon la revendication 1, dans lequel les instructions, lorsqu'elles sont exécutées par ledit au moins un processeur (120) individuellement ou collectivement, amènent le dispositif électronique à :
sur la base d'une entrée tactile sur un premier point du premier écran, identifier la sélection de la première fonction ; et
reconnaître ledit au moins un dispositif externe au cours d'une période pendant laquelle l'entrée tactile se poursuit.

14. Dispositif électronique selon la revendication 1, dans lequel les instructions, lorsqu'elles sont exécutées par ledit au moins un processeur (120) individuellement ou collectivement, amènent le dispositif électronique, sur la base de la reconnaissance dudit au moins un dispositif externe, à émettre un premier retour configuré.

15. Dispositif électronique selon la revendication 1, dans lequel les instructions, lorsqu'elles sont exécutées par ledit au moins un processeur (120) individuellement ou collectivement, amènent le dispositif électronique à émettre un second retour configuré indiquant que le signal de contrôle a été transmis audit au moins un dispositif externe.
